# EUROPEAN PATENT SPECIFICATION

(11) **EP 2 820 854 B1**
(45) Date of publication and mention of the grant of the patent: **08.08.2018**
(21) Application number: 13709661.6
(22) Date of filing: 27.02.2013
(51) Int. Cl.: H04N 19/597, H04N 21/434, H04N 21/81, H04N 21/845

(54) **BITSTREAM EXTRACTION IN THREE-DIMENSIONAL VIDEO**
BITSTREAM-EXTRAKTION IN EINEM DREIDIMENSIONALEN VIDEO
EXTRACTION DE FLUX BINAIRE DANS UNE VIDÉO EN TROIS DIMENSIONS

(30) Priority: 29.02.2012 US 201261605136 P; 26.02.2013 US 201313777785
(43) Date of publication of application: 07.01.2015
(73) Proprietor: Qualcomm Incorporated, San Diego, CA 92121-1714 (US)
(72) Inventor: CHEN, Ying, San Diego, CA 92121 (US); WANG, Ye-Kui, San Diego, CA 92121 (US); KARCZEWICZ, Marta, San Diego, CA 92121 (US)
(74) Representative: Loveless, Ian Mark
(86) International application number: PCT/US2013/028050
(87) International publication number: WO 2013/130631

(56) References cited:
- SUZUKI,HANNUKSELA,CHEN: "WD of MVC extension for inclusion of depth maps", 98. MPEG MEETING; 28-11-2011 - 2-12-2012; GENEVA; (MOTION PICTURE EXPERT GROUP OR ISO/IEC JTC1/SC29/WG11),, no. N12351, 5 January 2012 (2012-01-05), XP030018846, cited in the application
- RAPPORTEUR Q6/16: "H.264 Advanced video coding for generic audiovisual services (Rev): Output draft (for Consent)", ITU-T SG16 MEETING; 14-3-2011 - 25-3-2011; GENEVA,, no. T09-SG16-110314-TD-WP3-0188, 21 March 2011 (2011-03-21), XP030100592,
- R. SJOBERG ET AL: "Overview of HEVC high-level syntax and reference picture management", IEEE TRANSACTIONS ON CIRCUITS AND SYSTEMS FOR VIDEO TECHNOLOGY, 1 January 2012 (2012-01-01), pages 1-1, XP055045360, ISSN: 1051-8215, DOI: 10.1109/TCSVT.2012.2223052
- ANONYMOUS: "Working Draft 2 of MVC extension for inclusion of depth maps", 99. MPEG MEETING;6-2-2012 - 10-2-2012; SAN JOSÃ CR ; (MOTION PICTURE EXPERT GROUP OR ISO/IEC JTC1/SC29/WG11),, no. N12544, 2 March 2012 (2012-03-02), XP030019018,
- YING CHEN ET AL: "Description of 3D video coding technology proposal by Qualcomm Incorporated", 98. MPEG MEETING; 28-11-2011 - 2-12-2011; GENEVA; (MOTION PICTURE EXPERT GROUP OR ISO/IEC JTC1/SC29/WG11),, no. m22583, 21 November 2011 (2011-11-21), pages 1-21, XP030051146,
- YING CHEN ET AL: "High Level Syntax Design for MVC Compatible 3DV (Fast Track)", 99. MPEG MEETING; 6-2-2012 - 10-2-2012; SAN JOSÃ CR ; (MOTION PICTURE EXPERT GROUP OR ISO/IEC JTC1/SC29/WG11),, no. m23805, 1 February 2012 (2012-02-01), XP030052330,

## Description

### TECHNICAL FIELD

This disclosure relates to video coding (i.e., encoding and/or decoding of video data).

### BACKGROUND

Digital video capabilities can be incorporated into a wide range of devices, including digital televisions, digital direct broadcast systems, wireless broadcast systems, personal digital assistants (PDAs), laptop or desktop computers, tablet computers, e-book readers, digital cameras, digital recording devices, digital media players, video gaming devices, video game consoles, cellular or satellite radio telephones, so-called "smart phones," video teleconferencing devices, video streaming devices, and the like. Digital video devices implement video compression techniques, such as those described in the standards defined by MPEG-2, MPEG-4, ITU-T H.263, ITU-T H.264/MPEG-4, Part 10, Advanced Video Coding (AVC), the High Efficiency Video Coding (HEVC) standard presently under development, and extensions of such standards. The video devices may transmit, receive, encode, decode, and/or store digital video information more efficiently by implementing such video compression techniques.

Video compression techniques perform spatial (intra-picture) prediction and/or temporal (inter-picture) prediction to reduce or remove redundancy inherent in video sequences. For block-based video coding, a video slice (i.e., a video frame or a portion of a video frame) may be partitioned into video blocks. Video blocks in an intra-coded (I) slice of a picture are encoded using spatial prediction with respect to reference samples in neighboring blocks in the same picture. Video blocks in an inter-coded (P or B) slice of a picture may use spatial prediction with respect to reference samples in neighboring blocks in the same picture or temporal prediction with respect to reference samples in other reference pictures. Pictures may be referred to as frames, and reference pictures may be referred to a reference frames.

Spatial or temporal prediction results in a predictive block for a block to be coded. Residual data represents pixel differences between the original block to be coded and the predictive block. An inter-coded block is encoded according to a motion vector that points to a block of reference samples forming the predictive block, and the residual data indicates the difference between the coded block and the predictive block. An intra-coded block is encoded according to an intra-coding mode and the residual data. For further compression, the residual data may be transformed from the pixel domain to a transform domain, resulting in residual coefficients, which then may be quantized. The quantized coefficients, initially arranged in a two-dimensional array, may be scanned in order to produce a one-dimensional vector of coefficients, and entropy coding may be applied to the scanned, quantized coefficients to achieve even more compression.

A multi-view bitstream may be generated by encoding views e.g., from multiple color cameras. To further extend the flexibility of multi-view video, three-dimensional (3D) video standards have been developed. A 3D video bitstream may contain not only the views corresponding to multiple cameras, namely texture views, but also depth views associated with at least one or more texture views. For example, each view may consist of one texture view and one depth view.

### SUMMARY

The invention is defined by the appended claims. In general, this disclosure describes techniques for extracting a video data sub-bitstream from a three-dimensional video (3DV) bitstream. More specifically, a device determines a texture target view list that indicates views in the 3DV bitstream that have texture view components that are required for decoding pictures in a plurality of target views. The target views are a subset of the views in the bitstream that are to be decodable from the sub-bitstream. In addition, the device determines a depth target view list that indicates views in the 3DV bitstream that have depth view components that are required for decoding pictures in the plurality of target views. The device determines the sub-bitstream based at least in part on the texture target view list and the depth target view list.

In accordance with the techniques of this disclosure, a depth view may be excluded from the depth target view list even if the texture view associated with the depth view is in the texture target view list. Similarly, the techniques of this disclosure may enabled a texture view, when available, to be excluded from the texture target view list even if the depth view associated with the texture view, when available, is in the depth target view list. A texture view and a depth view may be considered associated if they correspond to the same camera location, i.e., in 3D video codecs such as MVC+D or 3D-AVC, having the same value of view identifier (view_id).

In one example, this disclosure describes a method of extracting a sub-bitstream from a 3DV bitstream that includes coded texture view components and coded depth view components. The method comprises determining a texture target view list that indicates views in the 3DV bitstream that have texture view components that are required for decoding pictures in a plurality of target views. In addition, the method comprises determining a depth target view list that indicates views in the 3DV bitstream that have depth view components that are required for decoding pictures in the plurality of target views. Furthermore, the method comprises determining the sub-bitstream based at least in part on the texture target view list and the depth target view list.

In another example, this disclosure describes a device comprising one or more processors configured to determine a texture target view list that indicates views in a 3DV bitstream that have texture view components that are required for decoding pictures in a plurality of target views, the 3DV bitstream including coded texture view components and coded depth view components. The one or more processors are also configured to determine a depth target view list that indicates views in the 3DV bitstream that have depth view components that are required for decoding pictures in the plurality of target views. Furthermore, the one or more processors may determine the sub-bitstream based at least in part on the texture target view list and the depth target view list.

In another example, this disclosure describes a device comprising means for determining a texture target view list that indicates views in a 3DV bitstream that have texture view components that are required for decoding pictures in a plurality of target views, the 3DV bitstream including coded texture view components and coded depth view components. The device also comprises means for determining a depth target view list that indicates views in the 3DV bitstream that have depth view components that are required for decoding pictures in the plurality of target views. In addition, the device comprises means for determining the sub-bitstream based at least in part on the texture target view list and the depth target view list.

In another example, this disclosure describes a computer-readable storage medium that stores instructions that, when executed by one or more processors of a device, configure the device to determine a texture target view list that indicates views in a 3DV bitstream that have texture view components that are required for decoding pictures in a plurality of target views, the 3DV bitstream including coded texture view components and coded depth view components. In addition, the instructions configure the device to determine a depth target view list that indicates views in the 3DV bitstream that have depth view components that are required for decoding pictures in the plurality of target views. Furthermore, the instructions configure the device to determine the sub-bitstream based at least in part on the texture target view list and the depth target view list.

The details of one or more examples of the disclosure are set forth in the accompanying drawings and the description below. Other features, objects, and advantages will be apparent from the description, drawings, and claims.

### BRIEF DESCRIPTION OF DRAWINGS

FIG. 1 is a block diagram illustrating an example video coding system that may utilize the techniques described in this disclosure.
FIG. 2 is a block diagram illustrating an example video encoder that may implement the techniques described in this disclosure.
FIG. 3 is a block diagram illustrating an example video decoder that may implement the techniques described in this disclosure.
FIG. 4 is a flowchart that illustrates an example sub-bitstream extraction operation, in accordance with one or more techniques of this disclosure.
FIG. 5 is a flowchart illustrating an example sub-bitstream extraction process in multi-view coding (MVC) compatible 3-dimensional video (3DV), in accordance with one or more techniques of this disclosure.
FIG. 6 is a flowchart illustrating a continuation of the example sub-bitstream extraction process of FIG. 5.
FIG. 7 is a flowchart illustrating an example operation to determine view identifiers of required anchor texture view components, in accordance with one or more techniques of this disclosure.
FIG. 8 is a flowchart illustrating an example operation to determine view identifiers of required anchor depth view components, in accordance with one or more techniques of this disclosure.
FIG. 9 is a flowchart illustrating an example operation to determine view identifiers of required non-anchor texture view components, in accordance with one or more techniques of this disclosure.
FIG. 10 is a flowchart illustrating an example operation to determine view identifiers of required non-anchor depth view components, in accordance with one or more techniques of this disclosure.
FIG. 11 is a flowchart illustrating a first example operation to mark video coding layer (VCL) network access layer (NAL) units and filler data NAL units as to be removed from a bitstream, in accordance with one or more techniques of this disclosure.
FIG. 12 is a flowchart illustrating a second example operation to mark VCL NAL units and filler data NAL units as to be removed from a bitstream, in accordance with one or more techniques of this disclosure.
FIG. 13 is a conceptual diagram illustrating an example MVC decoding order.
FIG. 14 is a conceptual diagram illustrating an example MVC temporal and inter-view prediction structure.

### DETAILED DESCRIPTION

A bitstream may include encoded multi-view video coding (MVC) video data. The MVC video data may include data defining multiple views of a scene. To support three-dimensional video (3DV), using multiview plus depth coding of three-dimensional (3D) video data, at least some of the views may include a texture component and a depth component. An example of a multiview plus depth coding process is under development as an extension of MVC under the ITU-T H.264 standard. This extension may be referred to as the 3DV extension of H.264/AVC. A video decoder may decode the bitstream to output 3DV. The bitstream may comprise a series of network abstraction layer (NAL) units that each contain portions of the encoded MVC video data. The inclusion of additional views in the encoded multi-view video data may significantly increase the bit rate of the bitstream.

Some computing devices that request the bitstream are not configured to handle all of the views included in the multi-view video data. Moreover, there may be insufficient bandwidth to transmit the full bitstream to a computing device that requests the bitstream. Accordingly, when a computing device requests the bitstream, an intermediate device, such as a device in a content delivery network (CDN), may extract a sub-bitstream from the bitstream. In other words, the intermediate device may perform a sub-bitstream extraction process to extract the sub-bitstream from the original bitstream. In some examples, the intermediate device extracts the sub-bitstream by selectively removing NAL units from the original bitstream. In other words, extraction is a process in which NAL units are removed and discarded, with the remaining non-removed NAL units being a sub-bitstream. As a result, the sub-bitstream may include fewer views than the original bitstream. The views to be included in the sub-bitstream may be referred to herein as "target views." To extract the sub-bitstream, the intermediate device may remove some views from the original bitstream, thereby producing the sub-bitstream with the remaining views. Moreover, given that views are removed from the bitstream, the bit rate of the sub-bitstream may be less than the bit rate of the original bitstream, thereby consuming less bandwidth when sent via the CDN to the device requesting the bitstream.

In some instances, each access unit of the video data may include a texture view component and a depth view component of each of the views. In this disclosure, a texture view component may correspond to a depth view component, or vice versa, if the texture view component and the depth view component are in the same view and are in the same access unit. If the intermediate device determines during the sub-bitstream extraction process that a texture view component is required to decode a picture in a target view, the intermediate device does not remove NAL units associated with the texture view component or the corresponding depth view component. Similarly, if the intermediate device determines during the sub-bitstream extraction process that a depth view component is required to decode a picture in a target view, the intermediate device does not remove NAL units associated with the depth view component or the corresponding texture view component.

However, there are instances where a texture view component is required to decode a picture of a target view, but the corresponding depth view component is not required to decode any picture of any target view. Similarly, there are instances where a depth view component is required to decode a picture of a target view, but the corresponding texture view component is not required to decode any picture of any target view. In such instances, the inclusion of both the texture view component and the corresponding depth view component may be bandwidth inefficient. Accordingly, it may be desirable to further remove from the original bitstream a depth view component that is associated with a texture view component but is not required to decode a picture of a target view or, alternatively, further remove from the original bitstream a texture view component that is associated with a depth view component but is not required to decode a picture of a target view.

The techniques of this disclosure are related to MVC and 3D video coding based on the MVC extension of H.264/AVC, referred to as the 3DV extension of H.264/AVC. More specifically, the techniques of this disclosure relate to extraction of sub-bitstreams from a 3DV bitstream. The 3DV bitstream may include coded texture view components and coded depth view components. The techniques of this disclosure may address problems that occur in MVC and 3DV, both of which may require that both the texture view component and the corresponding depth view component for a given view be sent whether or not both of the texture view component and the depth view component for the given view are actually required to decode a picture of a target view.

In accordance with the techniques of this disclosure, a device may maintain, during a sub-bitstream extraction process, separate target view lists for texture view components and depth view components. The target view list for texture view components may identify views that have texture view components that are required for decoding a picture in a target view. The target view list for depth view components may identify views that have depth view components that are required for decoding a picture in a target view. The device may determine the sub-bitstream based at least in part on the target view lists for texture and depth view components. For example, the device may remove from the bitstream video coding layer (VCL) NAL units that contain coded slices of texture view components that belong to views not listed in the target view list for texture view components. Likewise, in this example, the device may remove from the bitstream VCL NAL units that contain coded slices of depth view components that belong to views not listed in the target view list for depth view components.

The attached drawings illustrate examples. Elements indicated by reference numbers in the attached drawings correspond to elements indicated by like reference numbers in the following description. In this disclosure, elements having names that start with ordinal words (e.g., "first," "second," "third," and so on) do not necessarily imply that the elements have a particular order. Rather, such ordinal words may merely be used to refer to different elements of a same or similar type.

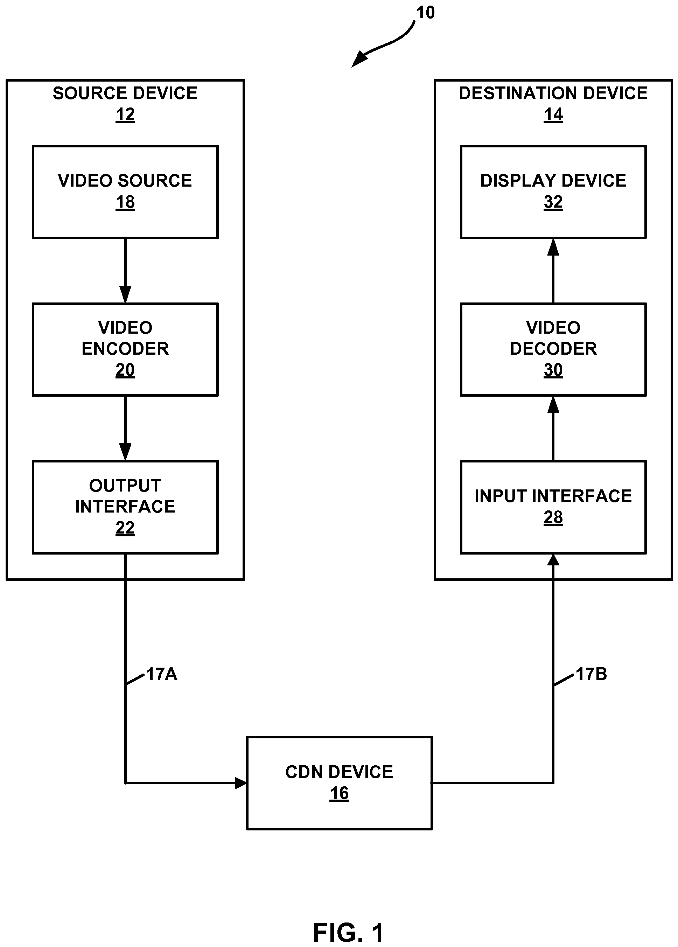

FIG. 1 is a block diagram illustrating an example video coding system 10 that may utilize the techniques of this disclosure. As used herein, the term "video coder" refers generically to both video encoders and video decoders. In this disclosure, the terms "video coding" or "coding" may refer generically to video encoding or video decoding.

As shown in FIG. 1, video coding system 10 includes a source device 12, a destination device 14, and a content delivery network (CDN) device 16. Source device 12 generates a bitstream that includes encoded video data. Accordingly, source device 12 may be referred to as a video encoding device or a video encoding apparatus. CDN device 16 may extract a sub-bitstream from the bitstream generated by source device 12 and may transmit the sub-bitstream to destination device 14. Destination device 14 may decode the encoded video data in the sub-bitstream. Accordingly, destination device 14 may be referred to as a video decoding device or a video decoding apparatus. Source device 12 and destination device 14 may be examples of video coding devices or video coding apparatuses.

Source device 12 and destination device 14 may comprise a wide range of devices, including desktop computers, mobile computing devices, notebook (e.g., laptop) computers, tablet computers, set-top boxes, telephone handsets such as so-called "smart" phones, televisions, cameras, display devices, digital media players, video gaming consoles, in-car computers, or the like. CDN device 16 may include various types of computing devices, such as server devices, personal computing devices, intermediate network devices (e.g., intelligent routers, switches, etc.), and so on. CDN device 16 may be part of a content-delivery network that delivers video content to video decoding devices, such as destination device 14. Although this disclosure describes a CDN device as implementing the techniques of this disclosure, the techniques of this disclosure may be implemented without the use of a CDN. Furthermore, the techniques of this disclosure may be implemented in other types of devices. For example, the techniques of this disclosure may be implemented in source device 12, destination device 14, or another computing device.

CDN device 16 may receive a bitstream from source device 12 via a channel 17A. Destination device 14 may receive a sub-bitstream from CDN device 16 via a channel 17B. This disclosure may refer to channels 17A and 17B collectively as "channels 17." Each of channels 17 may comprise one or more media or devices capable of moving encoded video data from one computing device to another computing device. In one example, either or both of channels 17 may comprise one or more communication media that enable a device to transmit encoded video data directly to another device in real-time. In this example, a device may modulate the encoded video data according to a communication standard, such as a wired or wireless communication protocol, and may transmit the modulated video data to another device. The one or more communication media may include wireless and/or wired communication media, such as a radio frequency (RF) spectrum or one or more physical transmission lines. The one or more communication media may form part of a packet-based network, such as a local area network, a wide-area network, or a global network (e.g., the Internet). The one or more communication media may include routers, switches, base stations, or other equipment that facilitate communication.

In another example, either or both of channels 17 may include a storage medium that stores encoded video data. In this example, CDN device 16 and/or destination device 14 may access the storage medium via disk access or card access. The storage medium may include a variety of locally-accessed data storage media such as Blu-ray discs, DVDs, CD-ROMs, flash memory, or other suitable digital storage media for storing encoded video data.

In a further example, either or both of channels 17 may include a file server or another intermediate storage device that stores encoded video data. In this example, CDN device 16 and/or destination device 14 may access encoded video data stored at the file server or other intermediate storage device via streaming or download. The file server may be a type of server capable of storing encoded video data and transmitting the encoded video data to destination device 14. Example file servers include web servers (e.g., for a website), file transfer protocol (FTP) servers, network attached storage (NAS) devices, and local disk drives.

CDN device 16 and/or destination device 14 may access the encoded video data through a standard data connection, such as an Internet connection. Example types of data connections may include wireless channels (e.g., Wi-Fi connections), wired connections (e.g., DSL, cable modem, etc.), or combinations of both that are suitable for accessing encoded video data stored on a file server. The transmission of encoded video data from the file server may be a streaming transmission, a download transmission, or a combination of both.

The techniques of this disclosure are not limited to wireless applications or settings. The techniques may be applied to video coding in support of a variety of multimedia applications, such as over-the-air television broadcasts, cable television transmissions, satellite television transmissions, streaming video transmissions, e.g., via the Internet, encoding of video data for storage on a data storage medium, decoding of video data stored on a data storage medium, or other applications. In some examples, video coding system 10 may be configured to support one-way or two-way video transmission to support applications such as video streaming, video playback, video broadcasting, and/or video telephony.

In the example of FIG. 1, source device 12 includes a video source 18, a video encoder 20, and an output interface 22. In some examples, output interface 22 may include a modulator/demodulator (modem) and/or a transmitter. Video source 18 may include a video capture device, e.g., a video camera, a video archive containing previously-captured video data, a video feed interface to receive video data from a video content provider, and/or a computer graphics system for generating video data, a combination of such sources of video data, or another source or sources of video data.

Video encoder 20 may encode video data from video source 18. In some examples, source device 12 directly transmits the encoded video data via output interface 22. In other examples, the encoded video data may also be stored onto a storage medium or a file server for later access by destination device 14 for decoding and/or playback.

In the example of FIG. 1, destination device 14 includes an input interface 28, a video decoder 30, and a display device 32. In some examples, input interface 28 includes a receiver and/or a modem. Input interface 28 may receive encoded video data via channel 17B. Display device 32 may be integrated with or may be external to destination device 14. In general, display device 32 displays decoded video data. Display device 32 may comprise a variety of display devices, such as a liquid crystal display (LCD), a plasma display, an organic light emitting diode (OLED) display, or another type of display device.

In some examples, video encoder 20 and video decoder 30 operate according to a video compression standard, such as ISO/IEC MPEG-4 Visual and ITU-T H.264 (also known as ISO/IEC MPEG-4 AVC), including its Scalable Video Coding (SVC) and Multiview Video Coding (MVC) extensions. A recent draft of the MVC extension of H.264/AVC is, as of February 26, 2013, available for download at http://wftp3.itu.int/av-arch/jvt-site/2009_01_Geneva/JVT-AD007.zip. Another joint draft of MVC is described in "Advanced Video Coding for Generic Audiovisual Services," ITU-T Recommendation H.264, March 2010. In addition, there is a video coding standard, as an extension of the MVC standard, namely "MVC based 3DV," described in Suzuki et al., "WD of MVC extension for inclusion of depth maps," ISO/IEC/JTCl/SC29/WG11/N12351, December 2011 (hereinafter, "MPEG document w12351").

In other examples, video encoder 20 and video decoder 30 may operate according to other video compression standards, including the H.265/High Efficiency Video Coding (HEVC) standard. A draft of the H.265/HEVC standard, referred to as "HEVC Working Draft 9," is described in Bross et al., "High Efficiency Video Coding (HEVC) text specification draft 9," Joint Collaborative Team on Video Coding (JCT-VC) of ITU-T SG16 WP3 and ISO/IEC JTC1/SC29/WG11, 11th Meeting: Shanghai, China, October, 2012, which, as of February 26, 2013, is downloadable from: http://phenix.int-evry.fr/jct/doc_end_user/documents/11_Shanghai/wg11/JCTVC-K1003-v8.zip. Other example video coding standards include ITU-T H.261, ISO/IEC MPEG-1 Visual, ITU-T H.262 or ISO/IEC MPEG-2 Visual, ITU-T H.263, and ISO/IEC MPEG-4 Visual. Although the techniques of this disclosure are described with respect to H.264/AVC, and for purposes of example, the 3DV extension of H.264/AVC using MVC plus depth techniques, such techniques also may be applied to other coding standards that make use of MVC plus depth techniques, and are not limited to any particular coding standard or technique.

FIG. 1 is merely an example and the techniques of this disclosure may apply to video coding settings (e.g., video encoding or video decoding) that do not necessarily include any data communication between the encoding and decoding devices. In other examples, data is retrieved from a local memory, streamed over a network, or the like. A video encoding device may encode and store data to memory, and/or a video decoding device may retrieve and decode data from memory. In many examples, the encoding and decoding is performed by devices that do not communicate with one another, but simply encode data to memory and/or retrieve and decode data from memory.

Video encoder 20, video decoder 30, and CDN device 16 each may be implemented as any of a variety of suitable circuitry, such as one or more microprocessors, digital signal processors (DSPs), application-specific integrated circuits (ASICs), field-programmable gate arrays (FPGAs), discrete logic, hardware, or any combinations thereof. If the techniques are implemented partially in software, a device may store instructions for the software in a suitable, non-transitory computer-readable storage medium and may execute the instructions in hardware using one or more processors to perform the techniques of this disclosure. Any of the foregoing (including hardware, software, a combination of hardware and software, etc.) may be considered to be one or more processors. Each of video encoder 20 and video decoder 30 may be included in one or more encoders or decoders, either of which may be integrated as part of a combined encoder/decoder (CODEC) in a respective device.

This disclosure may generally refer to video encoder 20 "signaling" certain information to another device, such as video decoder 30. The term "signaling" may generally refer to the communication of syntax elements and/or other data used to decode the compressed video data. Such communication may occur in real- or near-real-time. Alternately, such communication may occur over a span of time, such as might occur when storing syntax elements to a computer-readable storage medium in an encoded bitstream at the time of encoding, which then may be retrieved by a decoding device at any time after being stored to this medium. Accordingly, signaling may generally refer to providing information in an encoded bitstream for use in processing and/or decoding the encoded bitstream.

A video sequence typically includes a series of video frames. A group of pictures (GOP) generally comprises a series of one or more video frames. A GOP may include syntax data in a header of the GOP, a header of one or more frames of the GOP, or elsewhere, that describes a number of frames included in the GOP. Each frame may include frame syntax data that describe an encoding mode for the respective frame. Video encoder 20 typically operates on video units within individual video frames in order to encode the video data. In H.264/AVC, a video unit may correspond to a macroblock or a partition of a macroblock. An MB is a 16x16 block of luma samples and two corresponding blocks of chroma samples of a picture that has three sample arrays, or a 16x16 block of samples of a monochrome picture or a picture that is coded using three separate color planes. A MB partition is a block of luma samples and two corresponding blocks of chroma samples resulting from a partitioning of a macroblock for inter prediction for a picture that has three sample arrays, or a block of luma samples resulting from a partitioning of a macroblock for inter prediction of a monochrome picture or a picture that is coded using three separate color planes. In H.265/HEVC, a video unit may correspond to a prediction unit (PU). A PU may be a prediction block of luma samples, two corresponding prediction blocks of chroma samples of a picture, and syntax structures used to predict the prediction block samples. A prediction block may be a rectangular (e.g., MxN) block of samples on which the same prediction is applied. The blocks of video units may have fixed or varying sizes, and may differ in size according to a specified coding standard.

When video encoder 20 encodes a current video unit, video encoder 20 may generate predictive blocks that correspond to the current video unit. Video encoder 20 may perform intra prediction or inter prediction to generate the predictive blocks. When video encoder 20 performs intra prediction for a current video unit, video encoder 20 may generate, based on samples within the same picture as the current video unit, predictive blocks for the current video unit. When video encoder 20 performs inter prediction to generate predictive blocks for a current video unit, video encoder 20 may generate the predictive blocks based on samples within one or more reference pictures. The reference pictures may be pictures other than the picture that contains the current video unit.

After video encoder 20 generates predictive blocks for a current video unit, video encoder 20 may generate residual blocks for the current video unit. Each sample in a residual block may be based on a difference between corresponding samples in a luma or chroma block of the current video unit and a predictive block for the current video unit. Video encoder 20 may apply a transform to samples of a residual block to generate a transform coefficient block. Video encoder 20 may apply various transforms to the residual block. For example, video encoder 20 may apply a transform such as a discrete cosine transform (DCT), an integer transform, a wavelet transform, or a conceptually-similar transform to the residual block. Video encoder 20 may quantize the transform coefficient blocks to further reduce the number of bits used to represent the current video unit. After quantizing a transform coefficient block, video encoder 20 may entropy encode syntax elements that represent transform coefficients in the transform coefficient block and other syntax elements associated with the current video unit. For example, video encoder 20 may perform context-adaptive binary arithmetic coding (CABAC), context-adaptive variable length coding (CAVLC), exponential-Golomb coding, or another type of entropy encoding on the syntax elements. Video encoder 20 may output a bitstream that includes the entropy-encoded syntax elements associated with the current video unit.

The bitstream may include a sequence of bits that forms a representation of coded pictures and associated data. The bitstream may comprise a sequence of network abstraction layer (NAL) units. Each of the NAL units includes a NAL unit header and encapsulates a raw byte sequence payload (RBSP). The NAL unit header may include a syntax element that indicates a NAL unit type code. The NAL unit type code specified by the NAL unit header of a NAL unit indicates the type of the NAL unit. A RBSP may be a syntax structure containing an integer number of bytes that is encapsulated within a NAL unit. In some instances, an RBSP includes zero bits.

Different types of NAL units may encapsulate different types of RBSPs. For example, a first type of NAL unit may encapsulate an RBSP for a picture parameter set (PPS), a second type of NAL unit may encapsulate an RBSP for a coded slice, a third type of NAL unit may encapsulate an RBSP for supplemental enhancement information (SEI), and so on. NAL units that encapsulate RBSPs for video coding data (as opposed to RBSPs for parameter sets and SEI messages) may be referred to as video coding layer (VCL) NAL units. A NAL unit that encapsulates a coded slice may be referred to as a coded slice NAL unit.

Video decoder 30 may receive a bitstream that includes an encoded representation of video data. Video decoder 30 may parse the bitstream to extract syntax elements from the bitstream. As part of extracting the syntax elements from the bitstream, video decoder 30 may entropy decode portions of the bitstream. Video decoder 30 may perform, based at least in part on the syntax elements associated with a current video unit (e.g., a MB or MB partition), inter or intra prediction to generate predictive blocks for the current video unit. In addition, video decoder 30 may inverse quantize transform coefficients of transform coefficient blocks associated with the current video unit and may apply one or more inverse transforms to the transform coefficient blocks to generate residual blocks for the current video unit. Video decoder 30 may then reconstruct the luma and chroma blocks of the current video unit based at least in part on the residual blocks and the predictive blocks. In this way, by reconstructing the luma and chroma blocks of each video unit of a picture, video decoder 30 may reconstruct the picture.

As mentioned above, video encoder 20 may perform inter prediction to generate predictive blocks for a particular video unit. More specifically, video encoder 20 may perform uni-directional inter prediction or bi-directional inter prediction to generate the predictive blocks.

When video encoder 20 performs uni-directional inter prediction for a current video unit (e.g., a MB or MB partition), video encoder 20 may search for a reference block within reference pictures in a single reference picture list. The reference block may be a block of luma samples and corresponding blocks of chroma samples that are similar to the luma and chroma blocks of the current video unit. Furthermore, when video encoder 20 performs uni-directional inter prediction, video encoder 20 may generate motion information for the particular video unit. The motion information for the particular video unit may include a motion vector and a reference index. The motion vector may indicate a spatial displacement between a position within the current picture of the blocks of the current video unit and a position within the reference picture of the reference block. The reference index indicates a position within the reference picture list of the reference picture that contains the reference block. Samples in the predictive blocks for the current video unit may be equal to corresponding samples in the reference block.

When video encoder 20 performs bi-directional inter prediction for a current video unit (e.g., a MB or MB partition), video encoder 20 may search for a first reference block within reference pictures in a first reference picture list ("list 0") and may search for a second reference block within reference pictures in a second reference picture list ("list 1"). Video encoder 20 may generate, based at least in part on the first and the second reference blocks, the predictive blocks for the current video unit. In addition, video encoder 20 may generate a first motion vector that indicates a spatial displacement between the blocks of the current video unit and the first reference block. Video encoder 20 may also generate a first reference index that identifies a location within the first reference picture list of the reference picture that contains the first reference block. Furthermore, video encoder 20 may generate a second motion vector that indicates a spatial displacement between the blocks of the current video unit and the second reference block. Video encoder 20 may also generate a second reference index that identifies a location within the second reference picture list of the reference picture that includes the second reference block.

When video encoder 20 performs uni-directional inter prediction for a current video unit (e.g., a MB or MB partition), video decoder 30 may use the motion information of the current video unit to identify the reference block of the current video unit. Video decoder 30 may then generate the predictive blocks for the current video unit based on the reference block of the current video unit. When video encoder 20 performs bi-directional inter prediction for the current video unit, video decoder 30 may use the motion information for the current video unit to identify the two reference blocks of the current video unit. Video decoder 30 may generate the predictive blocks of the current video unit based on the two reference blocks of the current video unit.

Multiview Video Coding (MVC) is an extension of the H.264/AVC standard. The disclosure describes techniques for three-dimensional video (3DV), using MVC plus depth coding of three-dimensional (3D) video data, as in the 3DV extension of H.264/AVC. A brief discussion of MVC will now be presented. In the MVC extension to H.264/AVC, there may be multiple views of the same scene from different viewpoints. The term "access unit" is used to refer to the set of view components that correspond to the same time instance. A "view component" may be a coded representation of a view in a single access unit. Thus, video data may be conceptualized as a series of access units occurring over time. In this disclosure, a "view" may refer to a sequence of view components associated with the same view identifier. VCL NAL units that contain coded slices of view components belonging to the same view specify the same view identifier. A "view order index" is an index that indicates the decoding order of view components in an access unit.

MVC supports inter-view prediction. Inter-view prediction is similar to the inter prediction used in H.264/AVC and may use the same syntax elements. However, when a video coder performs inter-view prediction on a current video unit, video encoder 20 may use, as a reference picture, a picture that is in the same access unit as the current video unit, but in a different view. In contrast, conventional inter prediction only uses pictures in different access units as reference pictures. In MVC, a view is referred to as a "base view" if a video decoder (e.g., video decoder 30) can decode each picture in the view without reference to pictures in any other view. When coding a picture in one of the non-base views, a video coder may add a picture into a reference picture list if the picture is in a different view but within a same time instance (i.e., access unit) as the picture that the video coder is currently coding. Like other inter prediction reference pictures, the video coder may insert an inter-view prediction reference picture at any position of a reference picture list. In MVC, inter-view prediction may be supported by disparity motion compensation. Disparity motion compensation uses the syntax of the H.264/AVC motion compensation, but may allow a picture in a different view to be used as a reference picture. Coding of two or more views may be supported by MVC. One of the advantages of MVC may be that an MVC encoder may use more than two views as a 3D video input and an MVC decoder may decode such a multiview representation. As a result, video decoders that support MVC may process 3D video content with more than two views.

Furthermore, as mentioned above, there is an emerging MVC-compatible 3DV extension to H.264/AVC. MVC-compatible 3DV is designed to enable 3D enhancements while maintaining MVC compatibility. MVC-compatible 3DV provides for depth maps. Accordingly, MVC-compatible 3DV may be referred to as "MVC plus depth," "MVC+D," or as the "MVC-compatible extension including depth." A recent draft of MVC-compatible 3DV is provided in Suzuki et al., "WD on MVC extensions for inclusion of depth maps," ISO/IEC/JTC1/SC29/WG11/N12351, December 2011, is a draft of MVC-compatible 3DV. Suzuki et al., "WD on MVC extensions for inclusion of depth maps," ISO/IEC/JTC1/SC29/WG11/N12544, February 2012 (hereinafter referred to as "document N12544).

A depth view component includes a depth map. Depth maps are pictures whose pixel values represent the three-dimensional depths of objects shown in corresponding "texture" pictures. In some examples, brighter pixel values in a depth map may correspond to objects that are closer to a camera and darker pixel values in a depth map may correspond to objects that are further from the camera. The "texture" component pictures may be normal H.264/AVC pictures.

In this disclosure, the terminology of MVC-compatible 3DV may be applied. For instance, the texture part of a view may be referred to as a "texture view" and the depth part of a view may be referred to as a "depth view." The texture part of a view in one access unit, i.e., a texture view in an access unit, may be referred to as a "texture view component." The depth part of a view in one access unit, i.e., a depth view in an access unit, may be referred to as a "depth view component." The term "view component" may be used to refer to a view in one access unit and collectively to both the texture view component and the depth view component of the same access unit.

Video encoder 20 may use Depth Image Based Rendering (DIBR) to generate, based on available texture and depth view components, a synthetic texture view component. A synthetic texture view component may be a texture view component that is synthesized based on a depth map and one or more texture view components. For example, a particular texture view component may be a left-eye texture view component and video encoder 20 may use DIBR to generate a right-eye texture view component for 3-dimensional video playback. In some instances, a synthetic texture view component may be used as a reference picture for inter-access unit prediction or inter-view prediction. Synthetic texture view components that are used as reference pictures may be referred to as view synthesis reference pictures (VSRPs). Video coders may include VSRPs in reference picture lists.

As discussed above, a view component can use the view components in other views for reference; this is called inter-view prediction. In MVC (and MVC-compatible 3DV), inter-view prediction may be implemented as if the view component in another view was an inter prediction reference picture. The potential inter-view reference pictures may be signaled in a SPS extension for MVC (i.e., a SPS MVC extension). Table 1, below, shows an example syntax for the SPS MVC extension for H.264.

**TABLE 1**

| 1 | seq parameter set mvc extension() { | **Descriptor** |
|---|---|---|
| 2 | **num_views_minus1** | ue(v) |
| 3 | for(i = 0; i <= num_views_minus1; i++ ) | |
| 4 | **view_id[** i **]** | ue(v) |
| 5 | for(i = 1; i <= num_views_minus1; i++) { | |
| 6 | **num_anchor_refs_l0[** i **]** | ue(v) |
| 7 | for(j = 0; j < num anchor refs 10[ i ]; j++) | |
| 8 | **anchor_ref_l0[** i **][** j **]** | ue(v) |
| 9 | **num_anchor_refs_l1[** i **]** | ue(v) |
| 10 | for(j = 0; j < num anchor refs l1[i];j++) | |
| 11 | **anchor_ref_l1**[i][j] | ue(v) |
| 12 | } | |
| 13 | for(i = 1; i <= num views minus 1; i++) { | |
| 14 | **num_non_anchor_refs_l0[** i **]** | ue(v) |
| 15 | for(j = 0; j < num non anchor_ refs_ l0[ i ]; j++ ) | |
| 16 | **non_anchor_ref_l0[** i **][** j **]** | ue(v) |
| 17 | num_non_anchor_refs_l1[ i **]** | ue(v) |
| 18 | for(j = 0; j < num_non_anchor_refs_]1[ i ]; j++ ) | |
| 19 | **non_anchor_ref_l1[** i **][** j **]** | ue(v) |
| 20 | } | |
| 21 | num_level_values_signalled_minus1 | ue(v) |
| 22 | for(i = 0; i <= num_level_values_signalled_minus1; i++) { | |
| 23 | level_idc[i ] | u(8) |
| 24 | **num_applicable_ops_minus1[** i **]** | ue(v) |
| 25 | for(j = 0; j <= num_applicable_ops_minus1[i]; j++) { | |
| 26 | **applicable_op_temporal_id[**i **][** j **]** | u(3) |
| 27 | **applicable_op_num_target_views_minus1[**i **][** j **]** | ue(v) |
| 28 | for(k = 0; k <= applicable_op_num_target_views_minus1[ i ][ j ]; k++ ) | |
| 29 | **applicable_op_target_view_id[**i **][** j **][** k **]** | ue(v) |
| 30 | **applicable_op_num_views_minus1**[ i ][ j ] | ue(v) |
| 31 | } | |
| 32 | } | |
| 33 | } | |

In Table 1, above, and other syntax tables of this disclosure, syntax elements with type descriptor ue(v) may be variable-length unsigned integers encoded using 0^{th} order exponential Golomb (Exp-Golomb) coding with left bit first. In the example of Table 1 and the following tables, a syntax element having a descriptor of the form u(*n*), where *n* is a non-negative integer, are unsigned values of length *n.* The syntax elements with type descriptors u(3) and u(8) may be unsigned integers with 3 and 8 bits, respectively.

As shown in lines 3 and 4 of Table 1, the SPS MVC extension may specify view identifiers (e.g., view_id[i]) of applicable views. Furthermore, video encoder 20 may, in the SPS MVC extension of Table 1, signal, for each view, the number of views that can be used to form reference picture list 0 and reference picture list 1. For instance, the num_anchor_refs_l0[*i*] and num_non_anchor_refs_l0[*i*] syntax elements in lines 6 and 14 of Table 1 may specify the number of view components for inter-view prediction in the initial reference picture list 0 in decoding anchor and non-anchor view components, respectively, with view order index equal to *i.* The num_anchor_refs_l1[*i*] and num_non_anchor_refs_l1[*i*] syntax elements in lines 9 and 17 of Table 1 may specify the number of view components for inter-view prediction in the initial reference picture list 1 in decoding anchor and non-anchor view components, respectively, with view order index equal to *i.*

The SPS MVC extension may specify potential dependencies between views and view components applicable to the SPS. For example, in the example of Table 1, the SPS MVC extension may include syntax elements denoted anchor_ref_l0[*i*][*j*], anchor_ref_l1 [*i*][*j*], non_anchor_ref_l0[i][*j*], and non_anchor_ref_l1[*i*][*j*]. Anchor_ref_l10[*i*][*j*] specifies the view identifier (view id) of the *j*-th view component for inter-view prediction in the initial reference picture list RefPicList0 in decoding anchor view components with view order index (VOIdx) equal to *i.* Anchor_ref_l1[*i*][*j*] specifies the view identifier (view_id) of the *j*-th view component for inter-view prediction in the initial reference picture list RefPicList1 in decoding anchor view components with view order index (VOIdx) equal to *i.* Non_anchor_ref_l0[*i*][*j*] specifies the view identifier (view_id) of the *j*-th view component for inter-view prediction in the initial reference picture list RefPicList0 in decoding non-anchor view components with view order index (VOIdx) equal to *i.* Anchor ref l1[*i*][*j*] specifies the view identifier (view_id) of the *j*-th view component for inter-view prediction in the initial reference picture list RefPicList1 in decoding non-anchor view components with view order index (VOIdx) equal to *i.* In this way, the SPS MVC extension may specify the possible prediction relationships (i.e., dependencies) between anchor view components and potential inter-view reference pictures. Moreover, in this way, the SPS MVC extension may specify the possible prediction relationships (i.e., dependencies) between non-anchor view components and potential inter-view reference pictures.

A prediction relationship for an anchor picture, as signaled in the SPS MVC extension may be different from the prediction relationship for a non-anchor picture (signaled in the SPS MVC extension) of the same view. Reference picture lists may be modified during the reference picture list construction process in order to enable flexible ordering of the inter prediction or inter-view prediction reference pictures in the reference picture lists.

In MVC (and MVC-compatible 3DV), a NAL unit may include a one-byte NAL unit header and a three-byte MVC NAL unit header extension if the NAL unit is a prefix NAL unit or a MVC VCL NAL unit. The one-byte NAL unit header may include a NAL unit type and a nal_ref_idc syntax element. The nal_ref_idc syntax element specifies whether the NAL unit contains a SPS, a SPS extension, a subset SPS, a PPS, a slice of a reference picture, a slice data partition of a reference picture, or a prefix NAL unit preceding a slice of a reference picture. A prefix NAL unit in MVC (and MVC-compatible 3DV) may contain only a NAL unit header and the MVC NAL unit header extension. Table 2, below, indicates an example syntax structure for the MVC NAL unit header extension (nal_unit_header_mvc_extension).

**TABLE 2**

| nal_unit_header_mvc_extension() { | **C** | **Descriptor** |
|---|---|---|
| **non_idr_flag** | All | u(1) |
| **priority_id** | All | u(6) |
| **view_id** | All | u(10) |
| **temporal_id** | All | u(3) |
| **anchor_pic_flag** | All | u(1) |
| **inter _view_flag** | All | u(1) |
| **reserved_one_bit** | All | u(1) |
| } | | |

In the example syntax structure of Table 2, the non_idr_flag indicates whether the NAL unit belongs to an instantaneous decoding refresh (IDR) NAL unit that can be used as a closed-GOP random access point. A random access point is a picture that includes only I slices. The priority_id syntax element may be used for one-path adaptation, wherein adaptation can be done simply by checking priority_id. The view_id syntax element may indicate a view identifier of a current view. The NAL unit may encapsulate a coded representation of a slice of a view component of the current view. The temporal_id syntax element may indicate a temporal level of the NAL unit. The temporal level may indicate a frame rate associated with the NAL unit. The anchor_pic_flag syntax element may indicate whether the NAL unit belongs to an anchor picture that can be used as an open-GOP random access point. An anchor picture is a coded picture in which all slices may reference only slices in the same access unit. That is, inter-view prediction may be used to encode an anchor picture, but inter prediction may not be used to encode the anchor picture. The inter_view_flag syntax element indicates whether a current view component is used for inter-view prediction for NAL units in other views. The NAL unit may encapsulate a coded representation of a slice of the current view component.

U.S. Patent Application 13/414,515, filed March 7, 2012 introduces a depth_to_view_flag syntax element in the NAL unit header to indicate whether the current view component, if it is a texture view component, is not used to predict any depth view component. In other words, if the NAL unit encapsulates a coded slice of a texture view component, a depth to_view_flag syntax element in the NAL unit header of the NAL unit indicates whether the texture view component is used to predict a depth view component.

With the emergence of content delivery networks (CDNs) for delivery of multi-view 3D content via the Internet or other data networks, MVC-compatible 3DV has been adapted to facilitate delivery of video data bitstreams that include all of the various views to the CDNs. For example, a central video library server (or other devices) may encode multi-view video data as a single bitstream and may deliver this single bitstream to a CDN that serves various client devices. Devices, such as CDN device 16, in the CDN may locally store the bitstream for delivery to client devices, such as destination device 14.

CDN device 16 may perform a process referred to as sub-bitstream extraction in order to extract sub-bitstreams from a bitstream (i.e., the original bitstream). The original bitstream may include coded representations of a plurality of views. The sub-bitstreams may include coded representations of a subset of the views of the original bitstream. In some examples, CDN device 16 may extract a sub-bitstream from the original bitstream by selectively extracting particular NAL units from the original bitstream. The extracted NAL units form the sub-bitstream.

CDN device 16 may extract different sub-bitstreams based on the capabilities of different client devices and/or transmission bandwidths associated with different client devices. For example, one or more of the multiple views in the original bitstream may be designated for client devices having smaller displays, such as mobile telephones (where this view may be the center view described above, which is commonly the only view required for viewing 3D content on a smaller display that is typically viewed by a single viewer). In response to determining that the client device requesting the original bitstream is a mobile telephone, CDN device 16 may extract a particular sub-bitstream from the original bitstream and deliver the particular sub-bitstream to the mobile telephone. In this example, the particular sub-bitstream may include a coded representation for only the one of the views in the original bitstream.

For MVC-compatible 3DV, the bitstream extraction process may be described as follows with respect to the above-referenced document N12544. Reference to subclauses below refers to subclauses of document N12544 or other related documents relating to the 3DV extension of H.264/AVC, which may be referenced by document N12544. A number of subclauses of document N12544 are reproduced or referenced below, and outline the bitstream extraction process. The sub-bitstream extraction process is described as follows.

Specification of bitstream subsets: The specifications of subclause H.8.5 of Annex H of H.264 apply.

The following apply to the forthcoming Annex I of H.264.

I.8.5.1 Derivation process for required anchor view components: The specification of subclause H.8.5.1 apply with substituting "view component" with either "depth view component" or "texture view component" and "view" with either "depth view" or "texture view."

I.8.5.2 Derivation process for required non-anchor view components: The specification of subclause H.8.5.2 apply with substituting "view component" with either "depth view component" or "texture view component" and "view" with either "depth view" or "texture view."

I.8.5.3 Sub-bitstream extraction process: It is a requirement of bitstream conformance that any sub-bitstream that is the output of the process specified in this subclause with pIdTarget equal to any value in the range of 0 to 63, inclusive, tIdTarget equal to any value in the range of 0 to 7, inclusive, viewIdTargetList consisting of any one or more values of viewIdTarget identifying the views in the bitstream, shall conform to this Recommendation | International Standard. NOTE 1 - A conforming bitstream contains one or more coded slice NAL units with priority_id equal to 0 and temporal_id equal to 0. NOTE 2 - It may also be possible that not all operation points of sub-bitstreams resulting from the sub-bitstream extraction process have an applicable level_idc or level_idc[i]. In this case, each coded video sequence in a sub-bitstream may still conform to one or more of the profiles specified in Annex A, Annex H and Annex I, in ITU-T H.264, but may not satisfy the level constraints specified in subclauses A.3, H.10.2 and I.10.2, respectively.

Inputs to this sub-bitstream extraction process include: 1) a variable depthPresentFlagTarget (when present), 2) a variable pIdTarget (when present), 3) a variable tIdTarget (when present), and 4) a list viewIdTargetList consisting of one or more values of viewIdTarget (when present). Outputs of this process are a sub-bitstream and a list of VOIdx values VOIdxList. Additionally, when depthPresentFlagTarget is not present as input to this subclause, depthPresentFlagTarget is inferred to be equal to 0. When pIdTarget is not present as input to this subclause, pIdTarget is inferred to be equal to 63. When tIdTarget is not present as input to this subclause, tIdTarget is inferred to be equal to 7. When viewIdTargetList is not present as input to this subclause, there shall be one value of viewIdTarget inferred in viewIdTargetList and the value of viewIdTarget is inferred to be equal to view_id of the base view.

The sub-bitstream is derived by applying the following operations in sequential order:
1. Let VOIdxList be empty and minVOIdx be the VOIdx value of the base view.
2. For each value of viewIdTarget included in viewIdTargetList, invoke the process specified in subclause H.8.5.1 for texture views with the viewIdTarget as input.
3. If depthPresentFlagTarget is equal to 1, for each value of viewIdTarget included in viewIdTargetList, invoke the process specified in subclause H.8.5.1 for depth views with the viewIdTarget as input.
4. For each value of viewIdTarget included in viewIdTargetList, invoke the process specified in subclause H.8.5.2 for texture views with the value of viewIdTarget as input.
5. If depthPresentFlagTarget is equal to 1, for each value of viewIdTarget included in viewIdTargetList, invoke the process specified in subclause H.8.5.2 for depth views with the viewIdTarget as input.
6. Mark all VCL NAL units and filler data NAL units for which any of the following conditions are true as "to be removed from the bitstream":
   a) priority_id is greater than pIdTarget,
   b) temporal_id is greater than tIdTarget,
   c) anchor_pic_flag is equal to 1 and view id is not marked as "required for anchor,"
   d) anchor_pic_flag is equal to 0 and view_id is not marked as "required for non-anchor,"
   e) nal_ref_idc is equal to 0 and inter_view_flag is equal to 0 and view_id is not equal to any value in the list viewIdTargetList,
   f) nal_unit_type is equal to 21 and depthPresentFlagTarget is equal to 0.
7. Remove all access units for which all VCL NAL units are marked as "to be removed from the bitstream."
8. Remove all VCL NAL units and filler data NAL units that are marked as "to be removed from the bitstream."
9. When VOIdxList contains only one value of VOIdx that is equal to minVOIdx, remove the following NAL units:
   a) all NAL units with nal_unit_type equal to 14 or 15,
   b) all NAL units with nal_unit_type equal to 6 in which the first SEI message has payloadType in the range of 36 to 44, inclusive.
   When VOIdxList contains only one value of VOIdx equal to minVOIdx, the sub-bitstream contains only the base view or only a temporal subset of the base view.
10. When depthPresentFlagTarget is equal to 0, remove all NAL units with nal_unit_type equal to 6 in which the first SEI message has payloadType in the range of 45 to 47, inclusive.
11. Let maxTId be the maximum temporal_id of all the remaining VCL NAL units. Remove all NAL units with nal_unit_type equal to 6 that only contain SEI messages that are part of an MVC scalable nesting SEI message with any of the following properties:
   a) operation_point_flag is equal to 0 and all view components -in-au-flag is equal to 0 and none of sei_view_id[i] for all i in the range of 0 to num_view_components_minus1, inclusive, corresponds to a VOIdx value included in VOIdxList,
   b) operation_point_flag is equal to 1 and either sei_op_temporal_id is greater than maxTId or the list of sei_op_view_id[i] for all i in the range of 0 to num_view_components_op_minus1, inclusive, is not a subset of viewIdTargetList (i.e., it is not true that sei_op_view_id[i] for any i in the range of 0 to num view components_op_minus1, inclusive, is equal to a value in viewIdTargetList).
12. Remove each view scalability information SEI message and each operation point not present SEI message, when present.
13. When VOIdxList does not contain a value of VOIdx equal to minVOIdx, the view with VOIdx equal to the minimum VOIdx value included in VOIdxList is converted to the base view of the extracted sub-bitstream. An informative procedure that outlines key processing steps to create a base view is described in subclause I.8.5.6. When VOIdxList does not contain a value of VOIdx equal to minVOIdx, the resulting sub-bitstream according to the operation steps 1-9 above does not contain a base view that conforms to one or more profiles specified in Annex A. In this case, by this operation step, the remaining view with the new minimum VOIdx value is converted to be the new base view that conforms to one or more profiles specified in Annex A and Annex H.

In performing this sub-bitstream extraction process, CDN device 16 may reduce bandwidth requirements downstream from the CDN to a client device, such as destination device 14. To facilitate this bandwidth reduction, MVC-compatible 3DV features a number of video coding techniques that facilitate the sub-bitstream extraction process. For example, MVC-compatible 3DV provides for inter-prediction not only within a view but across views. Inter-view prediction is generally allowed in MVC-compatible 3DV between pictures in the same access unit, but between pictures in different access units. In this respect, decoding of a particular view component in a given access unit may require the decoding of one or more other view components in the given access unit or other access units. In other words, the particular view component may be dependent on one or more other view components in the given access unit or other access units. MVC-compatible 3DV structures access units and parameter sets (e.g., sequence parameter sets, picture parameter sets, etc.) such that CDN devices, such as CDN device 16, are able to determine the dependencies between view components without having to decode any view components. Rather, the CDN devices may determine the dependencies between view components based on target view lists signaled in sequence parameter sets.

Dependencies between view components (which may also be referred to as "prediction relationships") may be different for anchor and non-anchor pictures. An anchor picture is a coded picture in which all slices of the coded picture reference only slices within the same access unit. Consequently, inter-view prediction may be used in an anchor picture, but no inter-prediction (i.e., inter access unit prediction) is used in the anchor picture. All coded pictures following an anchor picture in output order do not use inter-prediction from any picture prior to the coded picture in decoding order. A non-anchor picture refers to any picture other than an anchor picture.

Typically, anchor pictures are utilized in a periodic manner within the bitstream to enable timely decoding of the content. For example, video encoder 20 may periodically insert an anchor picture into the bitstream so that a video decoder, such as video decoder 30, may decode the one or more view components without having to buffer a significant number of additional pictures. For this reason, anchor pictures may facilitate channel changes by reducing decoding times to a known maximum time limit tolerable by a consumer of such content.

To support the sub-bitstream extraction process, MVC-compatible 3DV provides different rules for forming sub-bitstreams with respect to anchor and non-anchor pictures without distinguishing between different view components of either anchor or non-anchor pictures. That is, a coded view generally includes not only a texture view component but also a depth view component so that 3D video may be realized. In some instances, the depth view component requires the texture view component to be properly decoded, while in other instances, the depth view component does not require the texture view component to be properly decoded. Thus, MVC-compatible 3DV as currently proposed may extract certain texture view components from the bitstream when forming the sub-bitstream even though such texture view components may not be required to decode the depth view component. In other words, for each set of view_id values targeted for output, once a depth view or texture view is identified to be used by an anchor picture or a non-anchor picture for inter-view prediction, all the VCL NAL units of that view, no matter whether they belong to a texture view component or a depth view component, are included in the extracted sub-bitstream. Not extracting unneeded texture view components from the bitstream (i.e., including unneeded texture view components in the sub-bitstream) may result in bandwidth inefficiencies.

In accordance with the techniques of this disclosure, CDN device 16 may maintain separate target view lists for the texture view component and the depth view component rather than maintain a single list for a coded picture regardless of its depth view component and texture view components. By maintaining these lists separately, CDN device 16 may identify when to extract a texture view component and a depth view component and does not always send both when only one or the other is required. This change in the way target view lists are maintained may apply both to the anchor target view lists and the non-anchor target view lists.

To extract a sub-bitstream from a 3DV bitstream, CDN device 16 may determine a texture target view list for a texture view component of a view in the 3DV bitstream. The texture target view list may indicate one or more portions of the 3DV bitstream used to predict the texture view component. In addition, CDN device 16 may determine a depth target view list for a depth view component of the NAL unit of the view in the 3DV bitstream. This depth target view list may indicate one or more portions of the 3DV bitstream used to predict the depth view component. CDN device 16 may determine the sub-bitstream based at least in part on the texture target view list and the depth target view list. Because the texture target view list may include different view identifiers than the depth target view list, CDN device 16 may extract a texture view component without extracting the associated depth view component. Likewise, CDN device 16 may extract a depth view component without extracting the associated texture view component. A texture view component and a depth view component may be considered associated if they correspond to the same camera location (i.e., the same view).

As indicated above, a SPS may specify potential dependencies between views and view components applicable to the SPS. CDN device 16 may determine, based at least in part on the plurality of target views and the potential dependencies specified by the SPS, the texture target view list. Likewise, CDN device 16 may determine, based at least in part on the plurality of target views and the potential dependencies specified by the SPS, the depth target view list.

In some instances, the headers of NAL units in the bitstream may include depth_to_view syntax elements, as described above. In accordance with the techniques of this disclosure, the semantics of the depth_to_view_flag syntax element may be extended to indicate whether a depth view component can be successfully decoded without decoding the associated texture view component. That is, the depth_to_view_flag syntax element of a NAL unit may indicate whether a coded slice of a depth view component encapsulated by the NAL unit references a texture view component. In this way, even when the texture view component is not in the target list of views to be extracted for texture, if the depth_to_view_flag syntax element of a NAL unit is set to 1 and the corresponding depth view component is in the target list of views to be extracted for depth, the VCL NAL units of the texture view component may be extracted.

Alternatively, a use texture flag (use_texture_flag) syntax element may be introduced into NAL unit headers. The use texture flag syntax element may indicate whether a depth view component can be successfully decoded without decoding the associated texture view component. In other words, the use texture flag syntax element of a NAL unit may indicate whether a depth view component encapsulated by the NAL unit is decodable without decoding a texture view component that corresponds to the depth view component. The use texture flag syntax element may be set to 0 for texture view components and may be set to 1 for depth view components when the depth view component requires the corresponding texture view component for correct decoding. The use texture flag syntax element may be set to 0 for a depth view component when the depth view component is not required for the corresponding texture view component for correct decoding.

Using these flags may facilitate, in CDN device 16, the more efficient performing of the sub-bitstream extraction process when both the texture target view list and depth target view lists are being utilized.

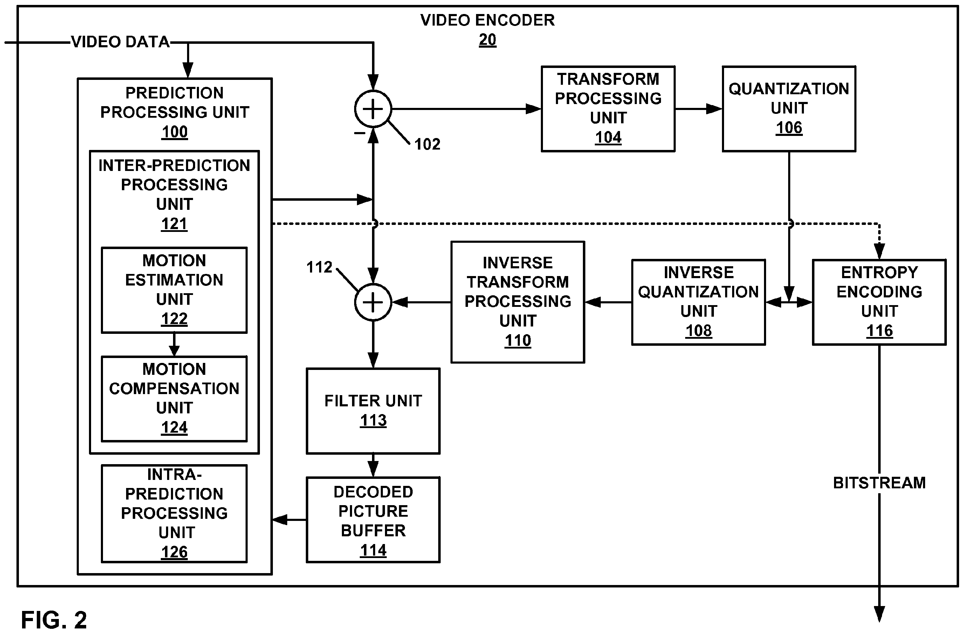

FIG. 2 is a block diagram illustrating an example video encoder 20 that may implement the techniques described in this disclosure. FIG. 2 is provided for purposes of explanation and should not be considered limiting of the techniques as broadly exemplified and described in this disclosure. For purposes of explanation, this disclosure describes video encoder 20 in the context of H.264/AVC coding. However, the techniques of this disclosure may be applicable to other coding standards or methods.

In the example of FIG. 2, video encoder 20 includes a prediction processing unit 100, a residual generation unit 102, a transform processing unit 104, a quantization unit 106, an inverse quantization unit 108, an inverse transform processing unit 110, a reconstruction unit 112, a filter unit 113, a decoded picture buffer 114, and an entropy encoding unit 116. Prediction processing unit 100 includes an inter-prediction processing unit 121 and an intra-prediction processing unit 126. Inter-prediction processing unit 121 includes a motion estimation unit 122 and a motion compensation unit 124. In other examples, video encoder 20 may include more, fewer, or different functional components.

Video encoder 20 receives video data. To encode the video data, video encoder 20 may encode each slice of each picture of the video data. As part of encoding a slice, video encoder 20 may encode video units of the slice.

Inter-prediction processing unit 121 may generate predictive data for a current video unit by performing inter prediction. The predictive data for the current video unit may include predictive blocks and motion information for the current video unit.

Slices may be I slices, P slices, SP slices, or B slices. Motion estimation unit 122 and motion compensation unit 124 may perform different operations for a video unit depending on whether the video unit is in an I slice, a P slice, a SP slice, or a B slice. In an I slice, all video units are intra predicted. Hence, if the video unit is in an I slice, motion estimation unit 122 and motion compensation unit 124 do not perform inter prediction on the video unit. An SP slice is a slice that may be coded using intra prediction or inter prediction with quantization of the prediction samples using at most one motion vector and reference index to predict the sample values of each block. An SP slice can be coded such that its decoded samples can be constructed identically to another SP slice or an SI slice. An SI slice is a slice that is coded using intra prediction only and using quantization of the prediction samples. An SI slice can be coded such that its decoded samples can be constructed identically to an SP slice.

Inter-prediction processing unit 121 may perform a reference picture list construction process at the beginning of coding each P, SP, or B slice. If inter-prediction processing unit 121 is coding a P or SP slice, inter-prediction processing unit 121 may generate a first reference picture list (e.g., list 0). If inter-prediction processing unit 121 is coding a B slice, inter-prediction processing unit 121 may generate the first reference picture list (e.g., list 0) and also generate a second reference picture list (e.g., list 1).

As mentioned above, the MVC NAL unit header extension includes a non_idr_flag syntax element. If the non_idr_flag syntax element indicates that the NAL unit encapsulates a coded slice of a IDR picture (e.g., the non_idr_flag syntax element is equal to 0), inter-prediction processing unit 121 may generate list 0 (and list 1 if the coded slice is a coded B slice) such that all entries indicate no reference picture. Otherwise, if the non_idr_flag syntax element indicates that the NAL unit encapsulates a coded slice of a non-IDR picture, inter-prediction processing unit 121 may generate an initial version of list 0 and, for a B slice, an initial version of list 1 as described in section 8.2.4.1 of the H.264/AVC standard.

Furthermore, after generating the initial version of list 0 and, for a B slice, the initial version of list 1, inter-prediction processing unit 121 may append inter-view reference components or inter-view only reference components to the initial version of list 0 and, for a B slice, the initial version of list 1. After appending the inter-view reference components or inter-view only reference components, inter-prediction processing unit 121 may perform a reference picture list modification process to generate a final version of list 0 and, for a B slice, a final version of list 1.

To append the inter-view reference components to list 0 and list 1, inter-prediction processing unit 121 may first determine whether the coded slice encapsulated by the NAL unit (i.e., the current slice) is part of an anchor picture. As described above, the MVC NAL unit header extension may include the anchor_pic_flag syntax element. The anchor_pic_flag syntax element of the NAL unit may indicate whether the current slice is part of an anchor picture. If the current slice is part of an anchor picture, inter-prediction processing unit 121 may append to list X (where X is 0 or 1) each inter-view reference picture that belongs to the same access unit as the current slice and is specified for anchor pictures in the applicable SPS. Thus, the only inter-view reference pictures in list X belong to the same access unit as the current slice.

For example, as indicated above, the MVC SPS extension may include num_anchor_refs_l0[i] syntax elements, num_anchor_refs_l1 syntax elements, anchor_ref_l0[i][j] syntax elements, and anchor_ref_l1[i][j] syntax elements. In this example, if the current slice has anchor_pic_flag equal to 1, inter-prediction processing unit 121 may, for each value of reference view index j from 0 to num_anchor_refs_l0[i] - 1, inclusive, in ascending order of j, append to list 0 the inter-view prediction reference with view id equal to anchor_ref_l0[i][j] from the same access unit as the current slice. Similarly, if the current slice has anchor_pic_flag equal to 1, inter-prediction processing unit 121 may, for each value of reference view index j from 0 to num_anchor_refs_l1[i] - 1, inclusive, in ascending order of j, append to list 1 the inter-view prediction reference with view id equal to anchor_ref_l1[i][j] from the same access unit as the current slice.

Otherwise, if the current slice is not part of an anchor picture, inter-prediction processing unit 121 may append to list X (where X is 0 or 1) each inter-view reference picture that belongs to the same access unit as the current slice and is specified for non-anchor pictures in the applicable SPS. Thus, the only inter-view reference pictures in list X belong to the same access unit as the current slice.

For example, as indicated above, the MVC SPS extension may include num_non_anchor_refs_l0[i] syntax elements, num_non_anchor_refs_l1 syntax elements, non_anchor_ref_l0[i][j] syntax elements, and non_anchor_ref_l1[i][j] syntax elements. In this example, if the current slice has anchor_pic_flag equal to 0, inter-prediction processing unit 121 may, for each value of reference view index j from 0 to num_non_anchor_refs_l0[i] - 1, inclusive, in ascending order of j, append to list 0 the inter-view prediction reference with view_id equal to non_anchor_ref_l0[i][j] from the same access unit as the current slice. Similarly, if the current slice has anchor_pic_flag equal to 0, inter-prediction processing unit 121 may, for each value of reference view index j from 0 to num_non_anchor_refs_l1[i] - 1, inclusive, in ascending order of j, append to list 1 the inter-view prediction reference with view id equal to non_anchor_ref_l1[i][j] from the same access unit as the current slice.

If the current video unit is in a P slice, motion estimation unit 122 may search the reference pictures in a reference picture list (e.g., list 0) for a reference block for the current video unit. The reference block of the video unit may include a luma block and corresponding chroma blocks that most closely correspond to the luma and chroma blocks of the current video unit. Motion estimation unit 122 may use a variety of metrics to determine how closely reference blocks in a reference picture correspond to the luma and chroma blocks of the current video unit. For example, motion estimation unit 122 may determine how closely a reference block in a reference picture corresponds to the luma and chroma blocks of the current video unit by a sum of absolute differences (SAD), sum of square differences (SSD), or other difference metrics.

Motion estimation unit 122 may generate a reference index that indicates the reference picture in list 0 containing a reference block of a current video unit (e.g., a MB or MB partition) in a P slice and a motion vector that indicates a spatial displacement between the blocks of the current video unit and the reference block. Motion estimation unit 122 may output the reference index and the motion vector as the motion information of the video unit. Motion compensation unit 124 may generate the predictive luma and chroma blocks for the current video unit based on the luma and chroma blocks of the reference block indicated by the motion information of the current video unit.

If the current video unit is in a B slice, motion estimation unit 122 may perform uni-directional inter prediction or bi-directional inter prediction for the current video unit. To perform uni-directional inter prediction for the current video unit, motion estimation unit 122 may search the reference pictures of list 0 or a second reference picture list (e.g., list 1) for a reference block for the video unit. In examples where video encoder 20 uses MVC or 3DV, list 0 and/or list 1 may include inter-view reference pictures. Motion estimation unit 122 may generate a reference index that indicates a position in list 0 or list 1 of the reference picture that contains a reference block. Furthermore, motion estimation unit 122 may determine a motion vector that indicates a spatial displacement between the blocks of the current video unit and the reference block. Motion estimation unit 122 may also generate a prediction direction indicator that indicates whether the reference picture is in list 0 or list 1.

To perform bi-directional inter prediction for a current video unit (e.g., a MB or MB partition), motion estimation unit 122 may search the reference pictures in list 0 for a reference block and may also search the reference pictures in list 1 for another reference block. Motion estimation unit 122 may generate reference indexes that indicate positions in list 0 and list 1 of the reference pictures that contain the reference blocks. In addition, motion estimation unit 122 may determine motion vectors that indicate spatial displacements between the reference blocks and the blocks of the current video unit. The motion information of the current video unit may include the reference indexes and the motion vectors of the current video unit. Motion compensation unit 124 may generate predictive luma and chroma blocks for the current video unit based on the reference blocks indicated by the motion information of the current video unit.

Intra-prediction processing unit 126 may generate predictive data for a current video unit by performing intra prediction. The predictive data for the current video unit may include predictive blocks for the current video unit and various syntax elements. Intra-prediction processing unit 126 may perform intra prediction for video units in I slices, P slices, SP slices and B slices.

To perform intra prediction on a current video unit, intra-prediction processing unit 126 may use multiple intra prediction modes to generate multiple sets of predictive data for the current video unit. To use an intra prediction mode to generate a set of predictive data for the current video unit, intra-prediction processing unit 126 may extend samples from neighboring blocks across the blocks of the current video unit in a direction associated with the intra prediction mode. The neighboring blocks may be above, above and to the right, above and to the left, or to the left of the blocks of the current video unit, assuming a left-to-right, top-to-bottom encoding order for video units. In some examples, the number of intra prediction modes may depend on the size of the blocks of the current video unit. Intra-prediction processing unit 126 selects one of the intra-prediction modes to select the predictive blocks for the current video unit.

Prediction processing unit 100 may select the predictive data for a current video unit from among the predictive data generated by inter-prediction processing unit 121 for the current video unit or the predictive data generated by intra-prediction processing unit 126 for the current video unit. In some examples, prediction processing unit 100 selects the predictive data for the current video unit based on rate/distortion metrics of the sets of predictive data.

Residual generation unit 102 may generate residual luma and chroma blocks by subtracting samples in predictive luma and chroma blocks from corresponding samples of the luma and chroma blocks of the current video unit. Transform processing unit 104 may generate transform coefficient blocks for each residual block by applying one or more transforms to the residual block. Transform processing unit 104 may apply various transforms to a residual block. For example, transform processing unit 104 may apply a discrete cosine transform (DCT), a directional transform, or a conceptually similar transform to a residual block.

Quantization unit 106 may quantize the transform coefficients in a transform coefficient block. The quantization process may reduce the bit depth associated with some or all of the transform coefficients. For example, an *n*-bit transform coefficient may be rounded down to an *m*-bit transform coefficient during quantization, where *n* is greater than *m*. Quantization unit 106 may quantize a transform coefficient block based on a quantization parameter (QP) value. Video encoder 20 may adjust the degree of quantization applied to transform coefficient blocks by adjusting the QP value.

Inverse quantization unit 108 and inverse transform processing unit 110 may apply inverse quantization and inverse transforms to a transform coefficient block, respectively, to reconstruct a residual block from the transform coefficient block. Reconstruction unit 112 adds samples in reconstructed residual blocks to corresponding samples from one or more predictive blocks generated by prediction processing unit 100 to produce reconstructed blocks. Filter unit 113 may perform a deblocking operation to reduce blocking artifacts in reconstructed blocks. Decoded picture buffer 114 may store the reconstructed blocks after filter unit 113 performs the one or more deblocking operations on the reconstructed blocks. Motion estimation unit 122 and motion compensation unit 124 may use a reference picture that contains the reconstructed blocks to perform inter prediction for video units of subsequent pictures. In addition, intra-prediction processing unit 126 may use reconstructed blocks in decoded picture buffer 114 to perform intra prediction.

Entropy encoding unit 116 may receive data from other functional components of video encoder 20. For example, entropy encoding unit 116 may receive transform coefficient blocks from quantization unit 106 and may receive syntax elements from prediction processing unit 100. Entropy encoding unit 116 may perform one or more entropy encoding operations on the data to generate entropy-encoded data. For example, video encoder 20 may perform a CAVLC operation, a CABAC operation, a variable-to-variable (V2V) length coding operation, a syntax-based context-adaptive binary arithmetic coding (SBAC) operation, a Probability Interval Partitioning Entropy (PIPE) coding operation, an Exponential-Golomb coding operation, or another type of entropy encoding operation on the data.

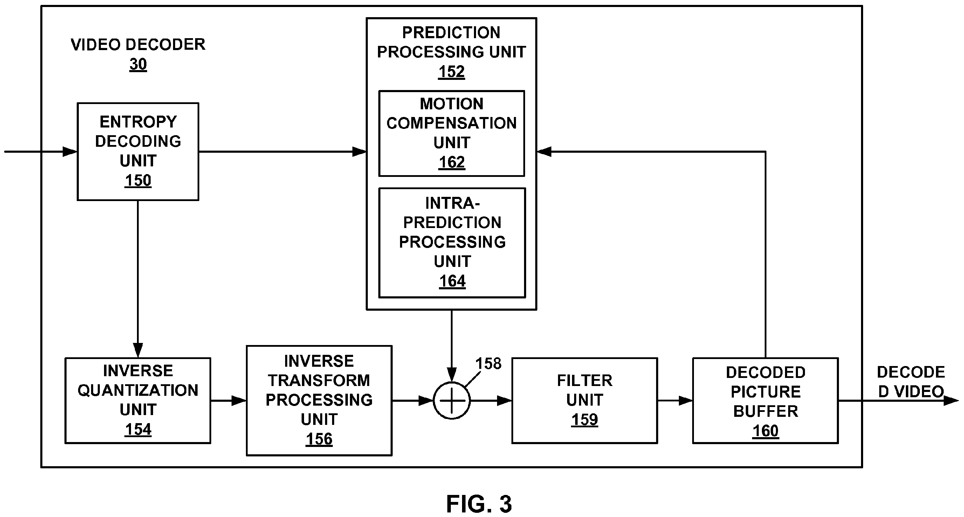

FIG. 3 is a block diagram illustrating an example video decoder 30 that may implement the techniques described in this disclosure. FIG. 3 is provided for purposes of explanation and is not limiting on the techniques as broadly exemplified and described in this disclosure. For purposes of explanation, this disclosure describes video decoder 30 in the context of H.264/AVC coding. However, the techniques of this disclosure may be applicable to other coding standards or methods.

In the example of FIG. 3, video decoder 30 includes an entropy decoding unit 150, a prediction processing unit 152, an inverse quantization unit 154, an inverse transform processing unit 156, a reconstruction unit 158, a filter unit 159, and a decoded picture buffer 160. Prediction processing unit 152 includes a motion compensation unit 162 and an intra-prediction processing unit 164. In other examples, video decoder 30 may include more, fewer, or different functional components.

Video decoder 30 receives a bitstream. Entropy decoding unit 150 may parse the bitstream to extract syntax elements from the bitstream. As part of parsing the bitstream, entropy decoding unit 150 may entropy decode entropy-encoded syntax elements in the bitstream. Prediction processing unit 152, inverse quantization unit 154, inverse transform processing unit 156, reconstruction unit 158, and filter unit 159 may generate decoded video data (i.e., reconstruct the video data) based on the syntax elements extracted from the bitstream. The syntax elements extracted from the bitstream may include syntax elements that represent transform coefficient blocks.

Inverse quantization unit 154 may inverse quantize, i.e., de-quantize, transform coefficient blocks. Inverse quantization unit 154 may use a QP value to determine a degree of quantization and, likewise, a degree of inverse quantization for inverse quantization unit 154 to apply. After inverse quantization unit 154 inverse quantizes a transform coefficient block, inverse transform processing unit 156 may apply one or more inverse transforms to the transform coefficient block in order to generate a residual block. For example, inverse transform processing unit 156 may apply an inverse DCT, an inverse integer transform, an inverse Karhunen-Loeve transform (KLT), an inverse rotational transform, an inverse directional transform, or another inverse transform to the transform coefficient block.

If a current video unit (e.g., a MB or MB partition) is encoded using intra prediction, intra-prediction processing unit 164 may perform intra prediction to generate predictive luma and chroma blocks for the current video unit. For example, intra-prediction processing unit 164 may determine an intra prediction mode for the current video unit based at least in part on syntax elements in the bitstream. Intra-prediction processing unit 164 may use the intra prediction mode to generate the predictive blocks for the current video unit based on spatially-neighboring blocks.

Prediction processing unit 152 may construct a first reference picture list (list 0) and a second reference picture list (list 1) based on syntax elements extracted from the bitstream. In examples where the bitstream is encoded using MVC or MVC-compatible 3DV, list 0 and/or list 1 may include inter-view reference pictures. Prediction processing unit 152 may construct the reference picture lists in the same manner as described above with reference to inter-prediction processing unit 121 of FIG. 2.

Furthermore, if a current video unit (e.g., a MB or MB partition) is encoded using inter prediction, entropy decoding unit 150 may extract, from the bitstream, motion information for the current video unit. Motion compensation unit 162 may determine, based at least in part on the motion information of the current video unit, one or more reference blocks for the current video unit. Motion compensation unit 162 may generate, based at least in part on the one or more reference blocks for the current video unit, predictive blocks for the current video unit.

Reconstruction unit 158 may reconstruct, based at least in part on the residual luma and chroma blocks for the current video unit and the predictive luma and chroma blocks of the current video unit, luma and chroma blocks for the current video unit. In particular, reconstruction unit 158 may add samples (e.g., luma or chroma components) of the residual blocks to corresponding samples of the predictive blocks to reconstruct the luma and chroma blocks of the current video unit. Filter unit 159 may perform a deblocking operation to reduce blocking artifacts associated with the reconstructed blocks of the current video unit. Video decoder 30 may store the reconstructed blocks in decoded picture buffer 160. Decoded picture buffer 160 may provide reference pictures for subsequent motion compensation, intra prediction, and presentation on a display device, such as display device 32 of FIG. 1. For instance, video decoder 30 may perform, based on the blocks in decoded picture buffer 160, intra prediction or inter prediction operations on PUs of other CUs.

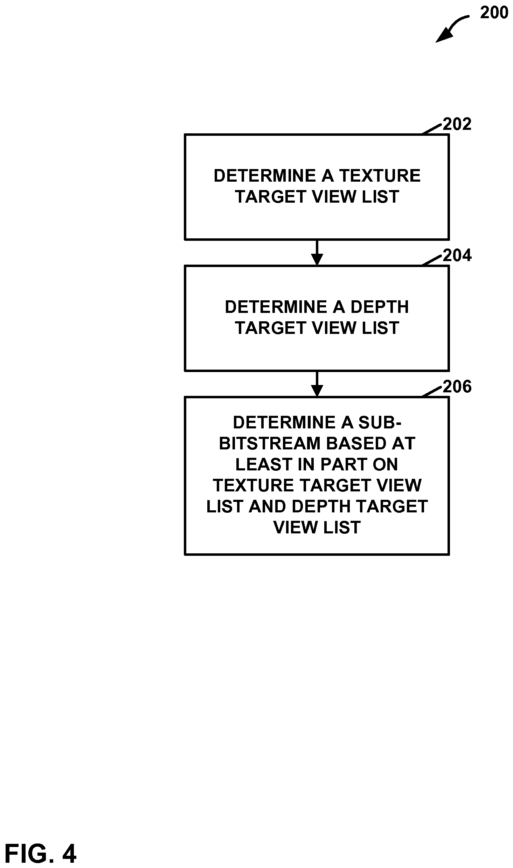

FIG. 4 is a flowchart that illustrates an example sub-bitstream extraction operation 200, in accordance with one or more techniques of this disclosure. The flowchart of FIG. 4 and the flowcharts of the following figures are provided as examples. In other examples, the techniques of this disclosure may be implemented using more, fewer, or different steps than those shown in the example of FIG. 4 and the following figures.

As illustrated in the example of FIG. 4, CDN device 16 may determine a texture target view list that indicates views in the 3DV bitstream that have texture view components that are required for decoding pictures in a plurality for a target views (202). The target views may be a subset of the views in the 3DV bitstream that are decodable from the sub-bitstream. In addition, CDN device 16 may determine a depth target view list that indicates views in the 3DV bitstream that have depth view components that are required for decoding pictures in the plurality of target views (204). CDN device 16 may determine the sub-bitstream based at least in part on the texture target view list and the depth target view list (206).

In some examples, the texture target view list includes view identifiers that identify the views in the 3DV bitstream that have texture view components that are required for decoding pictures in the plurality of target views. Furthermore, the depth target view list may include view identifiers that identify the views in the 3DV bitstream that have depth view components that are required for decoding pictures in the plurality of target views. The texture target view list may include one or more view identifiers that are different than the view identifiers in the depth target view list.

As described above, the 3DV bitstream may comprise a series of NAL units. In some examples, CDN device 16 may determine, based at least in part on whether the texture target view list or the depth target view list specifies a view identifier of a NAL unit, whether to remove the NAL unit from the 3DV bitstream.

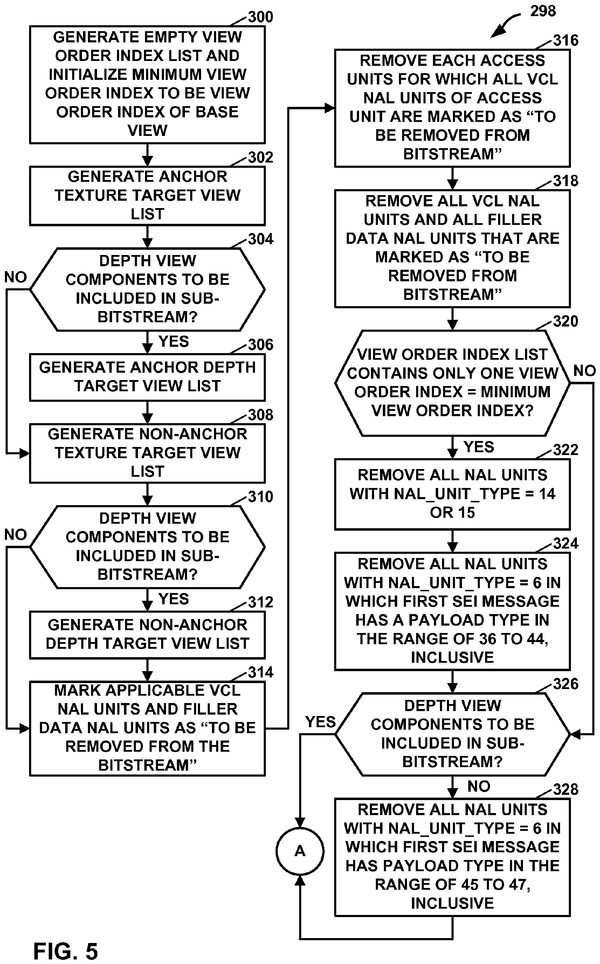

FIG. 5 is a flowchart illustrating an example sub-bitstream extraction process 298 in MVC-compatible 3DV, in accordance with one or more techniques of this disclosure. Sub-bitstream extraction process 298 may be a more specific example of sub-bitstream extraction process 200 of FIG. 4. In the example of FIG. 5, the target view list for texture view components (e.g., the texture target view list) is divided into two parts: a list of views required for anchor texture and a list of views required for non-anchor texture. Similarly, in the example of FIG. 5, the target view list for depth view components (e.g., the depth target view list) is divided into two parts: a list of views required for anchor depth and a list of views required for non-anchor depth.

Sub-bitstream extraction process 298 may take several variables as inputs. These inputs may include a depth present flag target (depthPresentFlagTarget), a variable pIdTarget, a variable tIdTarget, and a view identifier target list (viewIdTargetList). The view identifier target list may consist of one or more values of viewIdTarget. The values of viewIdTarget may include the view identifiers of views to be included in the target sub-bitstream (i.e., the sub-bitstream extracted by sub-bitstream extraction process 298). The depthPresentFlagTarget may indicate whether depth views are included in the target sub-bitstream. When depthPresentFlagTarget is not present as input, CDN device 16 may infer (i.e., automatically determine) that depthPresentFlagTarget is equal to 0. pIdTarget may identify a target priority level. When pIdTarget is not present as input, CDN device 16 may infer that pIdTarget is equal to 63. tIdTarget may identify a target temporal level. When tIdTarget is not present as input, CDN device 16 may infer that tIdTarget is equal to 7. When viewIdTargetList is not present as input, CDN device 16 may infer that there is one value of viewIdTarget in viewIdTargetList and that the value of viewIdTarget is equal to the view identifier (view id) of the base view.

The outputs of sub-bitstream extraction process 298 may include a sub-bitstream and a list of view order index values (VOIdxList). In some examples, it may be a requirement of bitstream conformance that any sub-bitstream that is the output of sub-bitstream extraction process 298 with pIdTarget be equal to any value in the range of 0 to 63, inclusive, tIdTarget be equal to any value in the range of 0 to 7, inclusive, where the viewIdTargetList consists of any one or more values of viewIdTarget identifying view in the bitstream conforms to the H.264/AVC standard. A conforming bitstream contains one or more coded slice NAL units with priority_id equal to 0 and temporal_id equal to 0. It may be possible that not all operation points of a sub-bitstream resulting from sub-bitstream extraction process 298 have an applicable level_idc or level_idc[i]. In this case, each coded video sequence in a sub-bitstream may (or must) still conform to one or more of the profiles specified in Annex A, Annex H and Annex I of the H.264/AVC standard, but may not satisfy the level constraints specified in subclauses A.3, H.1.0.2 and I.1.0.2, respectively, of the H.264/AVC standard.

In the example of FIG. 5, CDN device 16 may generate an empty view order index list (VOIdxList) and may initialize a minimum view order index (minVOIdx) to be the view order index of a base view (300). That is, CDN device 16 may let VOIdxList be empty and may let minVOIdx be the VOIdx value of the base view.

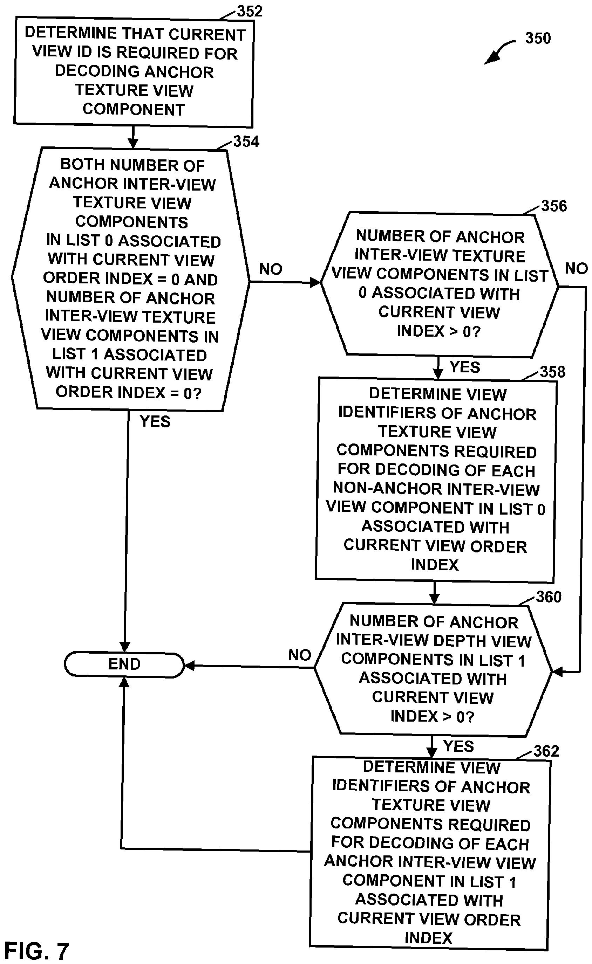

In addition, CDN device 16 may generate an anchor texture target view list (302). The anchor texture target view list may be a list of views that have texture view components required for decoding anchor pictures of the target views. This disclosure may refer to the views in the anchor texture target view list as views that are marked as "required for anchor texture." When CDN device 16 generates the anchor texture target view list, CDN device 16 may include in the view order index list (VOIdxList) the view order indexes of the views that are marked as "required for anchor texture." As described elsewhere in this disclosure, CDN device 16 may determine, based at least in part on the anchor texture target view list, VCL NAL units and filler data NAL units to remove from the bitstream. In various examples, CDN device 16 may generate the anchor texture target view list in various ways. For example, CDN device 16 may, for each value of viewIdTarget included in the viewIdTargetList, invoke an anchor texture target view list derivation process with the viewIdTarget as input. FIG. 7, which is described in detail later in this disclosure, is a flowchart of an example anchor texture target view list derivation process.

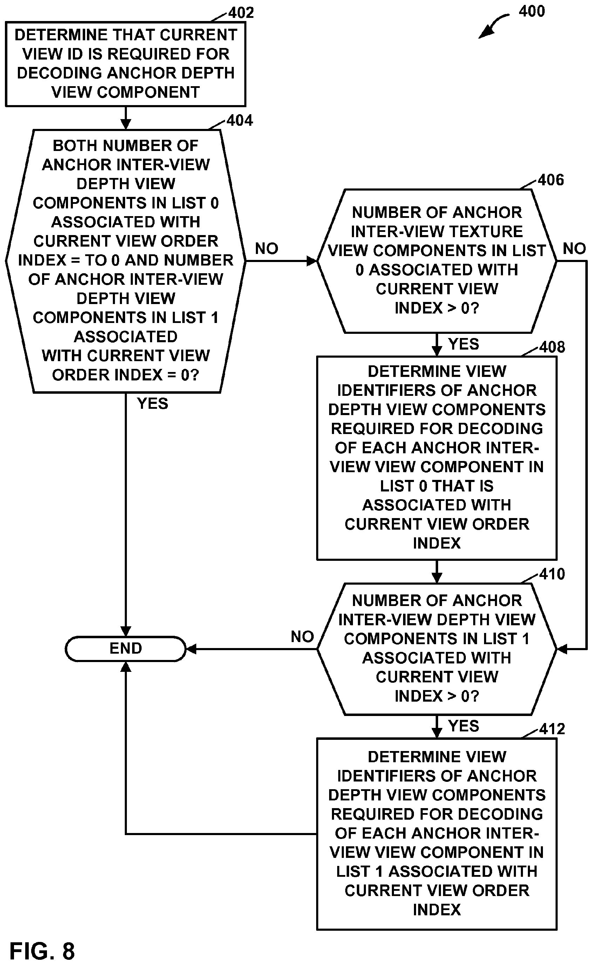

After generating the anchor texture target view list, CDN device 16 may determine whether depth view components are to be included in the sub-bitstream (304). In the example of FIG. 5, CDN device 16 may determine, based on depthPresentFlagTarget, whether depth view components are to be included in the sub-bitstream. In response to determining that depth view components are to be included in the sub-bitstream ("YES" of 304), CDN device 16 may generate an anchor depth target view list (306). The anchor depth target view list may be a list of views that have depth view components required for decoding anchor pictures of the target views. This disclosure may refer to the views in the anchor depth target view list as views that are marked as "required for anchor depth." When CDN device 16 generates the anchor depth target view list, CDN device 16 may include in the view order index list (VOIdxList) the view order indexes of the views that are marked as "required for anchor depth." As described elsewhere in this disclosure, CDN device 16 may determine, based at least in part on the anchor depth target view list, VCL NAL units and filler data NAL units to remove from the bitstream. In various examples, CDN device 16 may generate the anchor depth target view list in various ways. For example, if depthPresentFlagTarget is equal to 1, CDN device 16 may, for each viewIdTarget in viewIdTargetList, perform an anchor depth target view list derivation process with the viewIdTarget as input. FIG. 8, which is described in detail later in this disclosure, is a flowchart of an example anchor depth target view list derivation process.

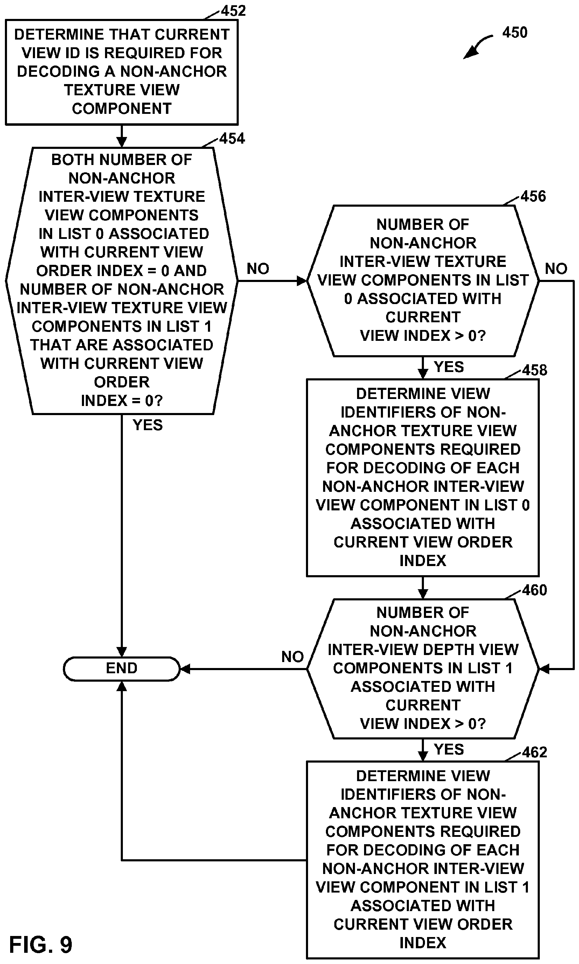

After generating the anchor depth target view list or in response to determining that depth view components are not to be included in the sub-bitstream ("NO" of 304), CDN device 16 may generate a non-anchor texture target view list (308). The non-anchor texture target view list may be a list of views that have texture view components required for decoding non-anchor pictures of the target views. This disclosure may refer to the views in the non-anchor texture target view list as views that are marked as "required for non-anchor texture." When CDN device 16 generates the non-anchor texture target view list, CDN device 16 may include in the view order index list (VOIdxList) the view order indexes of the views that are marked as "required for non-anchor texture." As described elsewhere in this disclosure, CDN device 16 may determine, based at least in part on the non-anchor texture target view list, VCL NAL units and filler data NAL units to remove from the bitstream. In various examples, CDN device 16 may generate the non-anchor texture target view list in various ways. For example, CDN device 16 may, for each value of viewIdTarget included in the viewIdTargetList, invoke a non-anchor texture target view list derivation process with the viewIdTarget as input. FIG. 9, which is described in detail later in this disclosure, is a flowchart of an example non-anchor texture target view list derivation process.

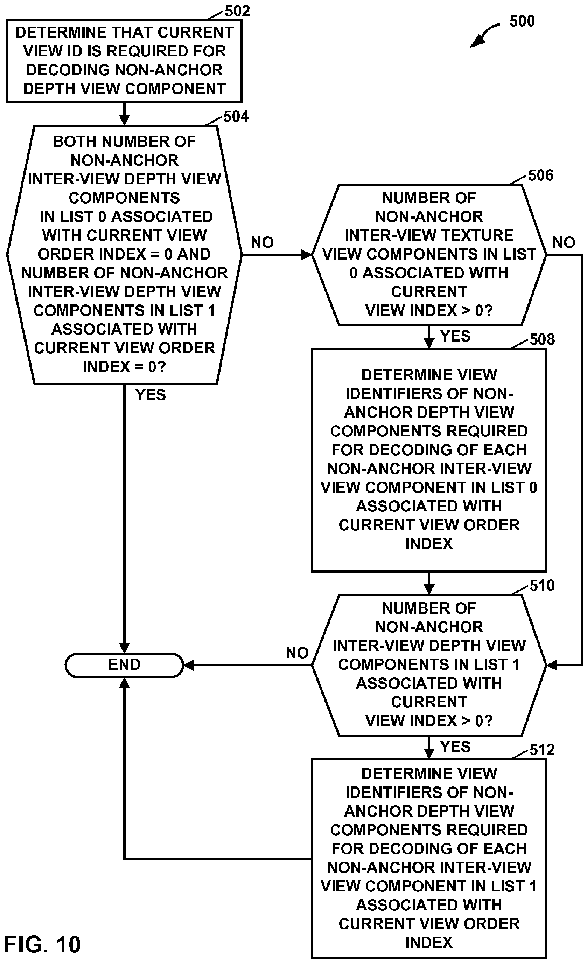

In addition, CDN device 16 may determine whether the depth view components are to be included in the sub-bitstream (310). In response to determining that depth view components are to be included in the sub-bitstream ("YES" of 310), CDN device 16 may generate a non-anchor depth target view list (312). The non-anchor depth target view list may be a list of views that have depth view components required for decoding non-anchor pictures of the target views. This disclosure may refer to the views in the non-anchor depth target view list as views that are marked as "required for non-anchor depth." When CDN device 16 generates the non-anchor depth target view list, CDN device 16 may include in the view order index list (VOIdxList) the view order indexes of the views that are marked as "required for non-anchor depth." As described elsewhere in this disclosure, CDN device 16 may determine, based at least in part on the non-anchor depth target view list, VCL NAL units and filler data NAL units to remove from the bitstream. In various examples, CDN device 16 may generate the non-anchor depth target view list in various ways. For example, if depthPresentFlagTarget is equal to 1, CDN device 16 may, for each value of viewIdTarget included in the viewIdTargetList, invoke a non-anchor depth target view list derivation process with the viewIdTarget as input. FIG. 10, which is described in detail later in this disclosure, is a flowchart of an example non-anchor texture target view list derivation process.

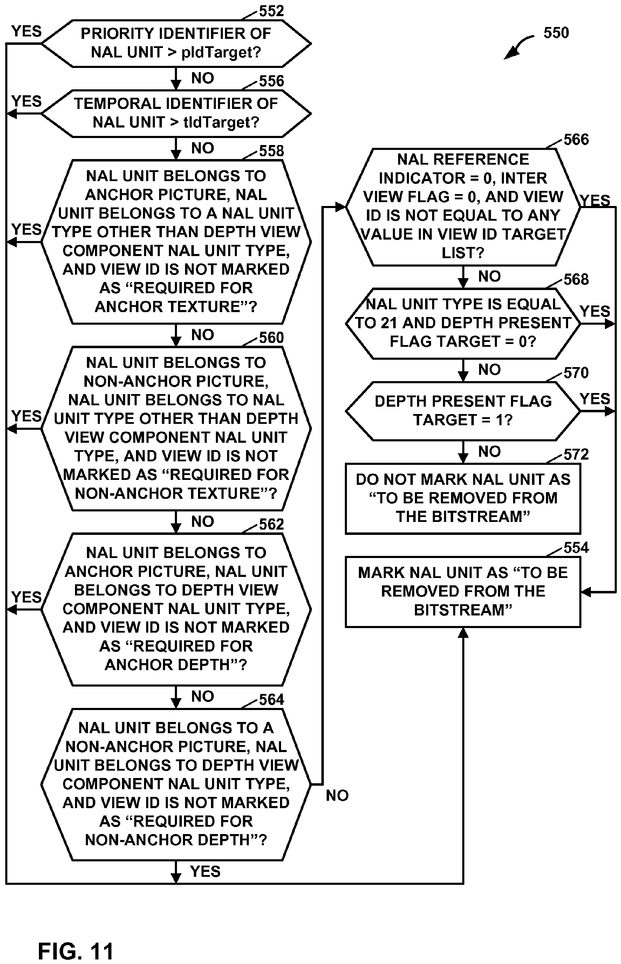

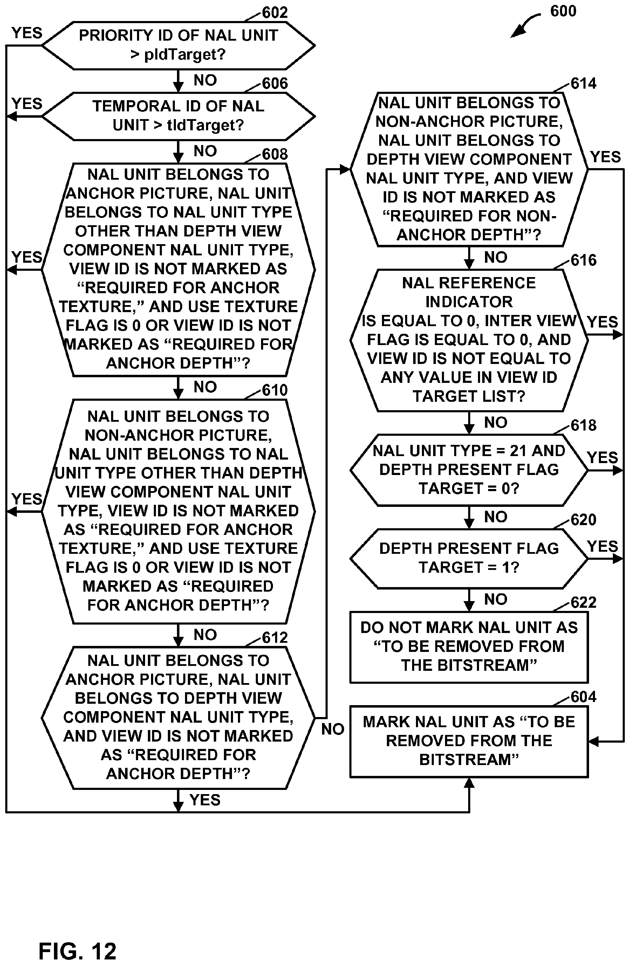

After generating the non-anchor depth target view list or in response to determining that depth view components are not to be included in the sub-bitstream ("NO" of 310), CDN device 16 may mark applicable VCL NAL units and filler data NAL units as "to be removed from the bitstream" (314). CDN device 16 may determine the applicable VAL and filler data NAL units in various ways. For example, CDN device 16 may determine the applicable VAL and filler data NAL units by performing the example operation of FIG. 11 or the example operation of FIG. 12. FIGS 11 and 12 are described in detail later in this disclosure.

Next, CDN device 16 may remove, from the bitstream, each access unit for which all VCL NAL units of the access unit are marked as "to be removed from the bitstream" (316). In addition, CDN device 16 may remove, from the bitstream, all VCL NAL units and all filler data NAL units that are marked as "to be removed from the bitstream" (318).

CDN device 16 may then determine whether the view order index list (VOIdxList) contains only one view order index (VOIdx) that is equal to the minimum view order index (minVOIdx) (320). As indicated above, the view order index list may include the view order indexes of views that are marked as "required for anchor texture," "required for anchor depth," "required for non-anchor texture," and "required for non-anchor depth." When VOIdxList contains only one value of VOIdx equal to minVOIdx, the sub-bitstream contains only the base view or only a temporal subset of the base view.

In response to determining that the view order index list (VOIdxList) contains only one view order index (VOIdx) that is equal to the minimum view order index (minVOIdx) ("YES" of 320), CDN device 16 may remove, from the bitstream, all prefix NAL units and all subset sequence parameter set NAL units (i.e., NAL units with nal_unit_type equal to 14 or 15, respectively) (322).

In addition, CDN device 16 may remove, from the bitstream, each SEI NAL unit (i.e., NAL units with nal_unit_type equal to 6) in which a first SEI message of the SEI NAL unit has a payload type in the range of 36 to 44, inclusive (324). In this way, when VOIdxList contains only one value of VOIdx that is equal to minVOIdx, CDN device 16 may remove the following NAL units: all NAL units with nal_unit_type equal to 14 or 15 and all NAL units with nal_unit_type equal to 6 in which the first SEI message has payloadType in the range of 36 to 44, inclusive.

SEI messages having payload type 36 include parallel decoding information. SEI messages having payload type 37 include MVC scalable nesting information. SEI messages having payload type 38 include view scalability information. SEI messages having payload type 39 include multiview scene information. SEI messages having payload type 40 include multiview acquisition information. SEI messages having payload type 41 include non-required view component information. SEI messages having payload type 42 include view dependency change information. SEI messages having payload type 43 include operation points not present information. SEI messages having payload type 44 include base view temporal hypothetical reference decoder (HRD) information.

After removing each SEI NAL unit in which a first SEI message of the SEI NAL unit has a payload type in the range of 36 to 44 or in response to determining that the view order index list (VOIdxList) does not contain only one view order index (VOIdx) that is equal to the minimum view order index (minVOIdx) ("NO" of 320), CDN device 16 may determine whether depth view components are to be included in the sub-bitstream (326). In response to determining that depth view components are not to be included in the sub-bitstream ("NO" of 326), CDN device 16 may remove, from the bitstream, each SEI NAL unit (i.e., each NAL unit that has nal_unit_type equal to 6) in which a first SEI message has a payload type in the range of 45 to 47, inclusive (328). For instance, when depthPresentFlagTarget is equal to 0, CDN device 16 may remove all NAL units with nal_unit_type equal to 6 in which the first SEI message has payloadType in the range of 45 to 47, inclusive. SEI messages having payload type 45 include 3DV scalable nesting information. SEI messages having payload type 46 include 3D view scalability information. SEI messages having payload type 47 include 3DV acquisition information.

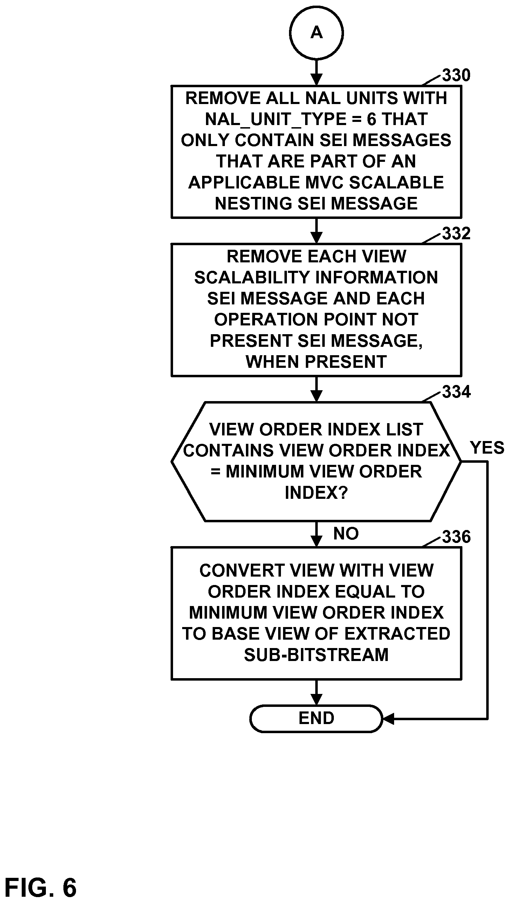

After removing each SEI NAL unit that has a first SEI message having a payload type in the range of 45 to 47 (328) or in response to determining that depth view components are to be included in the sub-bitstream ("YES" of 326), CDN device 16 may perform the continuation of sub-bitstream extraction process 298 shown in FIG. 6.

FIG. 6 is a flowchart illustrating a continuation of sub-bitstream extraction process 298 of FIG. 5. As shown in the example of FIG. 6, CDN device 16 may remove, from the bitstream, all SEI NAL units (i.e., NAL units with nal_unit_type equal to 6) that contain only SEI messages that are part of an applicable MVC scalable nesting message (330). A MVC scalable nesting message may be an applicable MVC scalable nesting message if an operation_point_flag syntax element of the MVC scalable nesting message is equal to 0, an all_view_components_in_au_flag syntax element of the MVC scalable nesting message is equal to 0, and none of the sei_view_id[i] syntax elements of the MVC scalable nesting message, for all i in the range of 0 to num_view_components_minus1, inclusive, correspond to a view order index (VOIdx) included in the view order index list (VOIdxList). Furthermore, an MVC scalable nesting message may be an applicable MVC scalable nesting message if an operation_point_flag syntax element of the MVC scalable nesting message is equal to 1 and either a sei_op_temporal_id syntax element of the MVC scalable nesting message is greater than maxTId or the list of sei_op_view_id[i] specified in the MVC scalable nesting message for all i in the range of 0 to num_view_components_op_minus1, inclusive, is not a subset of viewIdTargetList. MaxTId may be the maximum temporal_id of all the remaining VCL NAL units. In other words, an MVC scalable nesting message may be an applicable MVC scalable nesting message if an operation_point_flag of the MVC scalable nesting message is equal to 1 and it is not true that sei_op_view_id[i] for any i in the range of 0 to num_view_components_minus1, inclusive, is equal to a value in viewIdTargetList.

In this way, CDN device 16 may let maxTId be the maximum temporal_id of all the remaining VCL NAL units. Furthermore, CDN device 16 may remove all NAL units with nal_unit_type equal to 6 that only contain SEI messages that are part of an MVC scalable nesting SEI message with any of the following properties:
- operation_point_flag is equal to 0 and all_view components_in_au_flag is equal to 0 and none of sei_view_id[i] for all i in the range of 0 to num_view_components_minus1, inclusive, corresponds to a VOIdx value included in VOIdxList,
- operation_point_flag is equal to 1 and either sei_op_temporal_id is greater than maxTId or the list of sei_op_view_id[i] for all i in the range of 0 to num view components_op_minus1, inclusive, is not a subset of viewIdTargetList (i.e., it is not true that sei_op_view_id[i] for any i in the range of 0 to num view components_op_minus1, inclusive, is equal to a value in viewIdTargetList).

Next, CDN device 16 may remove, from each SEI NAL unit in the bitstream, each view scalability information SEI message and each operation point not present SEI message, when present (332). Furthermore, CDN device 16 may determine whether the view order index list (VOIdxList) contains a view order index equal to the minimum view order index (minVOIdx) (334). In response to determining that the view order index list contains a view order index equal to the minimum view order index ("YES" of 334), CDN device 16 may end sub-bitstream extraction process 298. On the other hand, in response to determining that the view order index list does not contain a view order index equal to the minimum view order index ("NO" of 334), CDN device 16 may convert the view with view order index equal to the minimum view order index to the base view of the extracted sub-bitstream (336). After converting the view, CDN device 16 may end sub-bitstream extraction process 298. The data remaining in the bitstream is a sub-bitstream that CDN device 16 may forward to another device, such as destination device 14. Thus, when VOIdxList does not contain a value of VOIdx equal to minVOIdx, the view with VOIdx equal to the minimum VOIdx value included in VOIdxList is converted to the base view of the extracted sub-bitstream. An informative procedure that outlines key processing steps to create a base view is described in subclause I.8.5.6 of MVC-compatible 3DV.

When the view order index list does not contain a view order index equal to the minimum view order index, the resulting sub-bitstream generated by sub-bitstream extraction process 298 may not contain a base view that conforms to one or more profiles specified in Annex A of the H.264/AVC standard. Thus, when the view order index list does not contain a view order index equal to the minimum view order index, the remaining view with the new minimum view order index value may be converted in action 336 to be the new base view that conforms to one or more profiles specified in Annex A and Annex H of the H.264/AVC standard.

FIG. 7 is a flowchart illustrating an example operation 350 to determine view identifiers of required anchor texture view components, in accordance with one or more techniques of this disclosure. As described above with respect to action 302 of FIG. 5, CDN device 16 may determine view identifiers that are marked as "required for anchor texture." CDN device 16 may determine the list of view identifiers that are marked as "required for anchor texture" by invoking operation 350 with an input parameter that specifies a current view identifier. In the context of FIG. 7, this disclosure may refer to the view order index that corresponds to the current view identifier as the "current vOIdx" or simply "vOIdx." Operation 350 may be similar to the process described in section H.8.5.1 of the H.264/AVC standard, substituting the term "view component" with "texture view component" and substituting "required for anchor" with "required for anchor texture."

As illustrated in the example of FIG. 7, CDN device 16 may determine that the current view identifier is required for decoding an anchor texture view component (352). For instance, CDN device 16 may mark the current view identifier as "required for anchor texture."

In addition, CDN device 16 may determine whether both the number of anchor inter-view texture view components in list 0 that are associated with the current view order index is equal to 0 and the number of anchor inter-view texture view components in list 1 that are associated with the current view order index is equal to 0 (354). In response to determining that both the number of anchor inter-view texture view components in list 0 that are associated with the current view order index is equal to 0 and the number of anchor inter-view texture view components in list 1 that are associated with the current view order index is equal to 0 ("YES" of 354), CDN device 16 may end operation 350.

On the other hand, in response to determining that the number of anchor inter-view texture view components in list 0 that are associated with the current view order index is not equal to 0 or that the number of anchor inter-view texture view components in list 1 that are associated with the current view order index is not equal to 0 ("NO" of 354), CDN device 16 may determine whether the number of anchor inter-view texture view components in list 0 that are associated with the current view order index is greater than to 0 (356).

In response to determining that the number of anchor inter-view texture view components in list 0 that are associated with the current view order index is greater than 0 ("YES" of 356), CDN device 16 may determine the view identifiers of anchor texture view components that are required for decoding of each anchor texture view component in list 0 that is associated with the current view order index (358). In some examples, CDN device 16 may do so by recursively performing operation 350 for each anchor texture view component in list 0 that is associated with the current view order index. In such examples, CDN device 16 may provide the view identifier of an anchor texture view component as input to operation 350 when recursively performing operation 350 for the anchor texture view component.

For instance, when num_anchor_refs_l0[vOIdx] is not equal to 0, CDN device 16 may invoke operation 350 for each texture view component in anchor_ref_l0[vOIdx][*i*] for all *i* in the range of 0 to num_anchor_l0[vOidx] - 1, inclusive, in ascending order of *i.* num_anchor_refs_l0[*i*] and anchor_ref_l0[*i*][*j*] are sets of syntax elements in a SPS MVC extension. num_anchor_refs_l0[*i*] specifies the number of view components for inter-view prediction in the initial reference picture list RefPicList0 (i.e., list 0) in decoding anchor view components with view order indexes equal to *i.* In other words, num_anchor_refs_l0[*i*] indicates how many view components initially in list 0 are used for inter-view prediction of anchor view components with view order indexes equal to *i*. num_anchor_refs_l0[*i*] specifies how many anchor_ref_l0[*i*][*j*] specifies the view identifier (view_id) of the *j*-th view component for inter-view prediction in the initial reference picture list RefPicList0 (i.e., list 0) in decoding anchor view components with view order index equal to *i.*

Otherwise, in response to determining that the number of anchor inter-view texture view components in list 0 that are associated with the current view order index is not greater than 0 ("NO" of 356) or after performing action 358, CDN device 16 may determine whether the number of anchor inter-view texture view components in list 1 that are associated with the current view order index is greater than 0 (360). In response to determining that the number of anchor inter-view texture view components in list 1 that are associated with the current view order index is not greater than 0 ("NO" of 360), CDN device 16 may end operation 350.

However, in response to determining that the number of anchor inter-view texture view components in list 1 that are associated with the current view order index is greater than 0 ("YES" of 360), CDN device 16 may determine the view identifiers of anchor texture view components that are required for decoding of each anchor texture view component in list 1 that is associated with the current view order index (362). In some examples, CDN device 16 may do so by recursively performing operation 350 for each anchor texture view component in list 1 that is associated with the current view order index. In such examples, CDN device 16 may provide the view identifier of an anchor texture view component as input to operation 350 when recursively performing operation 350 for the anchor texture view component.

For instance, when num_anchor_refs_l1[vOIdx] is not equal to 0, CDN device 16 may invoke operation 448 for each texture view component in anchor_ref_l1[vOIdx][*i*] for all *i* in the range of 0 to num_anchor_l1[vOidx] - 1, inclusive, in ascending order of *i.* num_anchor_refs_l1[*i*] and anchor_ref_l1[*i*][*j*] are sets of syntax elements in a SPS MVC extension. num_anchor_refs_l1[*i*] specifies the number of view components for inter-view prediction in the initial reference picture list RefPicList1 (i.e., list 1) in decoding anchor view components with view order indexes equal to *i.* anchor_ref_l1[*i*][*j*] specifies the view identifier (view_id) of the *j*-th view component for inter-view prediction in the initial reference picture list RefPicList1 (i.e., list 1) in decoding anchor view components with view order index equal to i. After performing action 362, CDN device 16 may end operation 350.

FIG. 8 is a flowchart illustrating an example operation 400 to determine view identifiers of required anchor depth view components, in accordance with one or more techniques of this disclosure. As described above with respect to action 306 of FIG. 5, CDN device 16 may determine view identifiers that are marked as "required for anchor depth." CDN device 16 may determine the list of view identifiers that are marked as "required for anchor depth" by invoking operation 400 with an input parameter that specifies a current view identifier. In the context of FIG. 8, this disclosure may refer to the view order index that corresponds to the current view identifier as the "current vOIdx" or simply "vOIdx." Operation 400 may be similar to the process described in section H.8.5.1 of the H.264/AVC standard, substituting the term "view component" with "depth view component" and substituting "required for anchor" with "required for anchor depth."

As illustrated in the example of FIG. 8, CDN device 16 may determine that the current view identifier is required for decoding an anchor depth view component (402). For instance, CDN device 16 may mark the current view identifier as "required for anchor depth."

In addition, CDN device 16 may determine whether both the number of anchor inter-view depth view components in list 0 that are associated with the current view order index is equal to 0 and the number of anchor inter-view depth view components in list 1 that are associated with the current view order index is equal to 0 (404). In response to determining that both the number of anchor inter-view depth view components in list 0 that are associated with the current view order index is equal to 0 and the number of anchor inter-view depth view components in list 1 that are associated with the current view order index is equal to 0 ("YES" of 404), CDN device 16 may end operation 400.

On the other hand, in response to determining that the number of anchor inter-view depth view components in list 0 that are associated with the current view order index is not equal to 0 or that the number of anchor inter-view depth view components in list 1 that are associated with the current view order index is not equal to 0 ("NO" of 404), CDN device 16 may determine whether the number of anchor inter-view depth view components in list 0 that are associated with the current view order index is greater than to 0 (406).

In response to determining that the number of anchor inter-view depth view components in list 0 that are associated with the current view order index is greater than 0 ("YES" of 406), CDN device 16 may determine the view identifiers of anchor depth view components that are required for decoding of each anchor depth view component in list 0 that is associated with the current view order index (408). In some examples, CDN device 16 may do so by recursively performing operation 400 for each anchor depth view component in list 0 that is associated with the current view order index. In such examples, CDN device 16 may provide the view identifier of an anchor depth view component as input to operation 400 when recursively performing operation 400 for the anchor depth view component.

For instance, when num_anchor_refs_l0[vOIdx] is not equal to 0, CDN device 16 may invoke operation 400 for each depth view component in anchor_ref_l0[vOIdx][*i*] for all *i* in the range of 0 to num_anchor_l0[vOidx] - 1, inclusive, in ascending order of *i.* num_anchor_refs_l0[*i*] and anchor_ref_l0[*i*][*j*] are sets of syntax elements in a SPS MVC extension. num_anchor_refs_l0[*i*] specifies the number of view components for inter-view prediction in the initial reference picture list RefPicList0 (i.e., list 0) in decoding anchor view components with view order indexes equal to *i.* anchor_ref_l0[*i*][*j*] specifies the view identifier (view_id) of the *j*-th view component for inter-view prediction in the initial reference picture list RefPicList0 (i.e., list 0) in decoding anchor view components with view order index equal to *i.*

Otherwise, in response to determining that the number of anchor inter-view depth view components in list 0 that are associated with the current view order index is not greater than to 0 ("NO" of 406) or after performing action 408, CDN device 16 may determine whether the number of anchor inter-view depth view components in list 1 that are associated with the current view order index is greater than 0 (410). In response to determining that the number of anchor inter-view depth view components in list 1 that are associated with the current view order index is not greater than 0 ("NO" of 410), CDN device 16 may end operation 400.

However, in response to determining that the number of anchor inter-view depth view components in list 1 that are associated with the current view order index is greater than 0 ("YES" of 410), CDN device 16 may determine the view identifiers of anchor texture view components that are required for decoding of each anchor depth view component in list 1 that is associated with the current view order index (412). In some examples, CDN device 16 may do so by recursively performing operation 400 for each anchor depth view component in list 1 that is associated with the current view order index. In such examples, CDN device 16 may provide the view identifier of an anchor depth view component as input to operation 400 when recursively performing operation 400 for the anchor depth view component.

For instance, when num_anchor_refs_l1[vOIdx] is not equal to 0, CDN device 16 may invoke operation 400 for each depth view component in anchor_ref_l1[vOIdx][*i*] for all *i* in the range of 0 to num_anchor_l1 [vOidx] - 1, inclusive, in ascending order of *i.* num_anchor_refs_l1[*i*] and anchor_ref_l1[*i*][*j*] are sets of syntax elements in a SPS MVC extension. num_anchor_refs_l1[*i*] specifies the number of view components for inter-view prediction in the initial reference picture list RefPicList1 (i.e., list 1) in decoding anchor view components with view order indexes equal to *i.* anchor_ref_l1[*i*][j] specifies the view identifier (view_id) of the *j*-th view component for inter-view prediction in the initial reference picture list RefPicList1 (i.e., list 1) in decoding anchor view components with view order index equal to *i*. After performing action 412, CDN device 16 may end operation 400.

FIG. 9 is a flowchart illustrating an example operation 450 to determine view identifiers of required non-anchor texture view components, in accordance with one or more techniques of this disclosure. As described above with respect to action 308 of FIG. 5, CDN device 16 may determine view identifiers that are marked as "required for non-anchor texture." CDN device 16 may determine the list of view identifiers that are marked as "required for non-anchor texture" by invoking operation 450 with an input parameter that specifies a current view identifier. In the context of FIG. 9, this disclosure may refer to the view order index that corresponds to the current view identifier as the "current vOIdx" or simply "vOIdx." Operation 450 may be similar to the process described in section H.8.5.2 of the H.264/AVC standard, substituting the term "view component" with "texture view component" and substituting "required for non-anchor" with "required for non-anchor texture."

As illustrated in the example of FIG. 9, CDN device 16 may determine that the current view identifier is required for decoding a non-anchor texture view component (452). For instance, CDN device 16 may mark the current view identifier as "required for non-anchor texture."

In addition, CDN device 16 may determine whether both the number of non-anchor inter-view texture view components in list 0 that are associated with the current view order index is equal to 0 and the number of non-anchor inter-view texture view components in list 1 that are associated with the current view order index is equal to 0 (454). In response to determining that both the number of non-anchor inter-view texture view components in list 0 that are associated with the current view order index is equal to 0 and the number of non-anchor inter-view texture view components in list 1 that are associated with the current view order index is equal to 0 ("YES" of 454), CDN device 16 may end operation 450.

On the other hand, in response to determining that the number of non-anchor inter-view texture view components in list 0 that are associated with the current view order index is not equal to 0 or that the number of non-anchor inter-view texture view components in list 1 that are associated with the current view order index is not equal to 0 ("NO" of 454), CDN device 16 may determine whether the number of non-anchor inter-view texture view components in list 0 that are associated with the current view order index is greater than to 0 (456).

In response to determining that the number of non-anchor inter-view texture view components in list 0 that are associated with the current view order index is greater than 0 ("YES" of 456), CDN device 16 may determine the view identifiers of non-anchor texture view components that are required for decoding of each non-anchor texture view component in list 0 that is associated with the current view order index (458). In some examples, CDN device 16 may do so by recursively performing operation 450 for each non-anchor texture view component in list 0 that is associated with the current view order index. In such examples, CDN device 16 may provide the view identifier of a non-anchor texture view component as input to operation 450 when recursively performing operation 450 for the non-anchor texture view component.

For instance, when num_non_anchor_refs_l0[vOIdx] is not equal to 0, CDN device 16 may invoke operation 450 for each texture view component in non_anchor_ref_l0[vOIdx][*i*] for all *i* in the range of 0 to num_non_anchor_l0[vOidx]-1, inclusive, in ascending order of *i*. num_non_anchor_refs_l0[*i*] and non_anchor_ref_l0[*i*][*j*] are sets of syntax elements in a SPS MVC extension. num_non_anchor_refs_l0[*i*] specifies the number of view components for inter-view prediction in the initial reference picture list RefPicList0 (i.e., list 0) in decoding non-anchor view components with view order indexes equal to *i.* non_anchor_ref_l0[*i*][*j*] specifies the view identifier (view_id) of the *j*-th view component for inter-view prediction in the initial reference picture list RefPicList0 (i.e., list 0) in decoding non-anchor view components with view order index equal to *i.*

Otherwise, in response to determining that the number of non-anchor inter-view texture view components in list 0 that are associated with the current view order index is not greater than 0 ("NO" of 456) or after performing action 458, CDN device 16 may determine whether the number of non-anchor inter-view texture view components in list 1 that are associated with the current view order index is greater than 0 (460). In response to determining that the number of non-anchor inter-view texture view components in list 1 that are associated with the current view order index is not greater than 0 ("NO" of 460), CDN device 16 may end operation 450.

However, in response to determining that the number of non-anchor inter-view texture view components in list 1 that are associated with the current view order index is greater than 0 ("YES" of 460), CDN device 16 may determine the view identifiers of non-anchor texture view components that are required for decoding of each non-anchor texture view component in list 1 that is associated with the current view order index (462). In some examples, CDN device 16 may do so by recursively performing operation 450 for each non-anchor texture view component in list 1 that is associated with the current view order index. In such examples, CDN device 16 may provide the view identifier of a non-anchor texture view component as input to operation 450 when recursively performing operation 450 for the non-anchor texture view component.

For instance, when num_non_anchor_refs_l1[vOIdx] is not equal to 0, CDN device 16 may invoke operation 450 for each texture view component in non_anchor_ref_l1[vOIdx][*i*] for all *i* in the range of 0 to num_non_anchor _l1 [vOidx] - 1, inclusive, in ascending order of *i.* num_non_anchor_refs_l1[*i*] and non_anchor_ref_l1[*i*][*j*] are sets of syntax elements in a SPS MVC extension. num_non_anchor_refs_l1[*i*] specifies the number of view components for inter-view prediction in the initial reference picture list RefPicList1 (i.e., list 1) in decoding non-anchor view components with view order indexes equal to *i.* non_anchor_ref_l1[*i*][*j*] specifies the view identifier (view id) of the *j*-th view component for inter-view prediction in the initial reference picture list RefPicList1 (i.e., list 1) in decoding non-anchor view components with view order index equal to *i*. After performing action 462, CDN device 16 may end operation 450.

FIG. 10 is a flowchart illustrating an example operation 500 to determine view identifiers of required non-anchor depth view components, in accordance with one or more techniques of this disclosure. As described above with respect to action 312 of FIG. 5, CDN device 16 may determine view identifiers that are marked as "required for non-anchor depth." CDN device 16 may determine the list of view identifiers that are marked as "required for non-anchor depth" by invoking operation 500 with an input parameter that specifies a current view identifier. In the context of FIG. 10, this disclosure may refer to the view order index that corresponds to the current view identifier as the "current vOIdx" or simply "vOIdx." Operation 500 may be similar to the process described in section H.8.5.2 of the H.264/AVC standard, substituting the term "view component" with "depth view component" and substituting "required for non-anchor" with "required for non-anchor depth."

As illustrated in the example of FIG. 10, CDN device 16 may determine that the current view identifier is required for decoding a non-anchor depth view component (502). For instance, CDN device 16 may mark the current view identifier as "required for non-anchor depth."

In addition, CDN device 16 may determine whether both the number of non-anchor inter-view depth view components in list 0 that are associated with the current view order index is equal to 0 and the number of non-anchor inter-view depth view components in list 1 that are associated with the current view order index is equal to 0 (504). In response to determining that both the number of non-anchor inter-view depth view components in list 0 that are associated with the current view order index is equal to 0 and the number of non-anchor inter-view depth view components in list 1 that are associated with the current view order index is equal to 0 ("YES" of 504), CDN device 16 may end operation 500.

On the other hand, in response to determining that the number of non-anchor inter-view depth view components in list 0 that are associated with the current view order index is not equal to 0 or that the number of non-anchor inter-view depth view components in list 1 that are associated with the current view order index is not equal to 0 ("NO" of 504), CDN device 16 may determine whether the number of non-anchor inter-view depth view components in list 0 that are associated with the current view order index is greater than to 0 (506).

In response to determining that the number of non-anchor inter-view depth view components in list 0 that are associated with the current view order index is greater than 0 ("YES" of 506), CDN device 16 may determine the view identifiers of non-anchor depth view components that are required for decoding of each non-anchor depth view component in list 0 that is associated with the current view order index (508). In some examples, CDN device 16 may do so by recursively performing operation 500 for each non-anchor depth view component in list 0 that is associated with the current view order index. In such examples, CDN device 16 may provide the view identifier of a non-anchor depth view component as input to operation 500 when recursively performing operation 500 for the non-anchor depth view component.

For instance, when num_non_anchor_refs_l0[vOIdx] is not equal to 0, CDN device 16 may invoke operation 500 for each depth view component in non_anchor_ref_l0[vOIdx][*i*] for all *i* in the range of 0 to num_non_anchor_10[vOidx] - 1, inclusive, in ascending order of *i.* num_non_anchor_refs_10[*i*] and non_anchor_ref_l0[*i*][*j*] are sets of syntax elements in a SPS MVC extension. num_non_anchor_refs_l0[*i*] specifies the number of view components for inter-view prediction in the initial reference picture list RefPicList0 (i.e., list 0) in decoding non-anchor view components with view order indexes equal to *i.* non_anchor_ref_l0 [*i*][*j*] specifies the view identifier (view_id) of the *j*-th view component for inter-view prediction in the initial reference picture list RefPicList0 (i.e., list 0) in decoding non-anchor view components with view order index equal to *i.*

Otherwise, in response to determining that the number of non-anchor inter-view depth view components in list 0 that are associated with the current view order index is not greater than to 0 ("NO" of 506) or after performing action 508, CDN device 16 may determine whether the number of non-anchor inter-view depth view components in list 1 that are associated with the current view order index is greater than 0 (510). In response to determining that the number of non-anchor inter-view depth view components in list 1 that are associated with the current view order index is not greater than 0 ("NO" of 510), CDN device 16 may end operation 500.

However, in response to determining that the number of non-anchor inter-view depth view components in list 1 that are associated with the current view order index is greater than 0 ("YES" of 510), CDN device 16 may determine the view identifiers of non-anchor texture view components that are required for decoding of each non-anchor depth view component in list 1 that is associated with the current view order index (512). In some examples, CDN device 16 may do so by recursively performing operation 500 for each non-anchor depth view component in list 1 that is associated with the current view order index. In such examples, CDN device 16 may provide the view identifier of a non-anchor depth view component as input to operation 500 when recursively performing operation 500 for the non-anchor depth view component.

For instance, when num_non_anchor_refs_l1[vOIdx] is not equal to 0, CDN device 16 may invoke operation 500 for each depth view component in non_anchor_ref_l1[vOIdx][*i*] for all *i* in the range of 0 to num_non_anchor_l1[vOidx]-1, inclusive, in ascending order of *i.* num_non_anchor_refs_l1[*i*] and non_anchor_ref_l1[*i*][*j*] are sets of syntax elements in a SPS MVC extension. num_non_anchor_refs_l1[*i*] specifies the number of view components for inter-view prediction in the initial reference picture list RefPicList1 (i.e., list 1) in decoding non-anchor view components with view order indexes equal to *i.* non_anchor_ref_l1[*i*][*j*] specifies the view identifier (view id) of the *j*-th view component for inter-view prediction in the initial reference picture list RefPicList1 (i.e., list 1) in decoding non-anchor view components with view order index equal to *i*. After performing action 512, CDN device 16 may end operation 500.

FIG. 11 is a flowchart illustrating a first example operation 550 to mark VCL NAL units and filler data NAL units as to be removed from a bitstream, in accordance with one or more techniques of this disclosure. CDN device 16 may perform the operation of FIG. 11 as at least part of performing action 316 in the example of FIG. 5. The following description of FIG. 11 may be applicable to VCL NAL units and filler data NAL units.

As illustrated in the example of FIG. 11, CDN device 16 may determine whether a priority identifier (priority_id) of the NAL unit is greater than pIdTarget (552). As discussed above, the MVC NAL unit header extension of the NAL unit may include the priority id syntax element. pIdTarget is a parameter that is provided to the sub-bitstream extraction process, such as sub-bitstream extraction process 298 of FIG. 5. pIdTarget may identify a target priority level. In response to determining that the priority identifier of the NAL unit is greater than pIdTarget ("YES" of 552), CDN device 16 may mark the NAL unit as "to be removed from the bitstream" (554). In this way, CDN device 16 may mark all VCL NAL units and filler data NAL units as "to be removed from the bitstream" where the priority_id syntax elements of the NAL units are greater than pIdTarget.

On the other hand, in response to determining that the priority identifier of the NAL unit is not greater than pIdTarget ("NO" of 552), CDN device 16 may determine whether a temporal identifier (temporal_id) of the NAL unit is greater than tIdTarget (556). As discussed above, the MVC NAL unit header extension of the NAL unit may include the temporal id syntax element and the tIdTarget is a parameter that is provided to the sub-bitstream extraction process, such as sub-bitstream extraction process 298. tIdTarget may identify a target temporal level. In response to determining that the temporal identifier of the NAL unit is greater than tIdTarget ("YES" of 556), CDN device 16 may mark the NAL unit as "to be removed from the bitstream" (554). In this way, CDN device 16 may mark all VCL NAL units and filler data NAL units as "to be removed from the bitstream" where the temporal_id syntax elements of the NAL units are greater than tIdTarget.

In response to determining that the temporal identifier of the NAL unit is not greater than tIdTarget ("NO" of 556), CDN device 16 may, in accordance with the techniques of this disclosure, determine whether the NAL unit belongs to an anchor picture, the NAL unit belongs to a NAL unit type other than a depth view component NAL unit type, and a view identifier (view_id) of the NAL unit is not marked as "required for anchor texture" (558). CDN device 16 may determine, based on an anchor picture flag (anchor_pic_flag) of the NAL unit, whether the NAL unit belongs to an anchor picture. NAL units belonging to the depth view component NAL unit type may include coded slice extensions for depth view components. In some examples, NAL units having nal_unit_type equal to 21 belong to the depth view component NAL unit type.

In response to determining that the NAL unit belongs to an anchor picture, the NAL unit belongs to a NAL unit type other than the depth view component NAL unit type, and the view identifier of the NAL unit is not marked as "required for anchor texture" ("YES" of 558), CDN device 16 may mark the NAL unit as "to be removed from the bitstream" (554). In this way, CDN device 16 may mark a VCL NAL unit or a filler data NAL unit as "to be removed from the bitstream" if the anchor_pic_flag of the NAL unit is equal to 1, the nal_unit_type of the NAL unit is not 21, and the view_id of the NAL unit is not marked as "required for anchor texture."

View identifiers marked as "required for anchor texture" are in the anchor texture target view list. Thus, CDN device 16 may determine, based at least in part on whether the NAL unit belongs to an anchor picture, whether the NAL unit belongs to a depth view component NAL unit type, and whether the anchor texture target view list specifies the view identifier of the NAL unit, whether to remove the NAL unit from the 3DV bitstream, wherein NAL units belonging to the depth view component NAL unit type encapsulate coded slice extensions for depth view components. For example, CDN device 16 may determine that the NAL unit is to be removed from the 3DV bitstream when an anchor picture flag syntax element in a header of the NAL unit is equal to 1, a NAL unit type syntax element in the header of the NAL unit is not equal to 21, and a view identifier syntax element in the header of the NAL unit is equal to a view identifier of a view in the anchor texture target list.

However, in response to determining that the NAL unit belongs to an anchor picture, the NAL unit belongs to the depth view component NAL unit type, or the view identifier of the NAL unit is marked as "required for anchor texture" ("NO" of 558), CDN device 16 may, in accordance with the techniques of this disclosure, determine whether the NAL unit belongs to a non-anchor picture, the NAL unit type belongs to a NAL unit type other than the depth view component NAL unit type, and a view identifier (view id) of the NAL unit is not marked as "required for non-anchor texture" (560).

In response to determining that the NAL unit belongs to a non-anchor picture, the NAL unit belongs to a NAL unit type other than the depth view component NAL unit type, and the view identifier of the NAL unit is not marked as "required for non-anchor texture" ("YES" of 560), CDN device 16 may mark the NAL unit as "to be removed from the bitstream" (554). In this way, CDN device 16 may mark a VCL NAL unit or a filler data NAL unit as "to be removed from the bitstream" if the anchor_pic_flag of the NAL unit is equal to 0, the nal_unit_type of the NAL unit is not 21, and the view_id of the NAL unit is not marked as "required for non-anchor texture."

View identifiers marked as "required for non-anchor texture" are in the non-anchor texture view target list. Thus, CDN device 16 may determine, based at least in part on whether the NAL unit belongs to an anchor picture, whether the NAL unit belongs to the depth view component NAL unit type, and whether the non-anchor texture target view list specifies the view identifier of the NAL unit, whether to remove the NAL unit from the 3DV bitstream. For example, CDN device 16 may determine that the NAL unit is to be removed from the 3DV bitstream when the anchor picture flag syntax element in the header of the NAL unit is equal to 0, the NAL unit type syntax element in the header of the NAL unit is not equal to 21, and the view identifier syntax element in the header of the NAL unit is equal to a view identifier of a view in the non-anchor texture target list.

In response to determining that the NAL unit does not belong to an anchor picture, the NAL unit belongs to the depth view component NAL unit type, or the view identifier of the NAL unit is marked as "required for non-anchor texture" ("NO" of 560), CDN device 16 may determine whether the NAL unit belongs to an anchor picture, the NAL unit belongs to the depth view component NAL unit type, and a view identifier (view_id) of the NAL unit is not marked as "required for anchor depth" (562).

In response to determining that the NAL unit belongs to an anchor picture, the NAL unit belongs to the depth view component NAL unit type, and the view identifier of the NAL unit is not marked as "required for anchor depth" ("YES" of 562), CDN device 16 may mark the NAL unit as "to be removed from the bitstream" (554). In this way, CDN device 16 may mark a VCL NAL unit or a filler data NAL unit as "to be removed from the bitstream" if the anchor_pic_flag of the NAL unit is equal to 1, the nal_unit_type of the NAL unit is 21, and the view id of the NAL unit is not marked as "required for anchor depth."

View identifiers marked as "required for anchor depth" are in the anchor depth target view list. Thus, CDN device 16 may determine, based at least in part on whether the NAL unit belongs to an anchor picture, whether the NAL unit belongs to a depth view component NAL unit type, and whether the anchor depth target view list specifies the view identifier of the NAL unit, whether to remove the NAL unit from the 3DV bitstream, wherein NAL units belonging to the depth view component NAL unit type encapsulate coded slice extensions for depth view components. For instance, CDN device 16 may determine that the NAL unit is to be removed from the 3DV bitstream when an anchor picture flag syntax element in a header of the NAL unit is equal to 1, a NAL unit type syntax element in the header of the NAL unit is equal to 21, and a view identifier syntax element in the header of the NAL unit is equal to a view identifier of a view in the anchor depth target list.

Furthermore, in response to determining that the NAL unit does not belong to an anchor picture, the NAL unit does not belong to the depth view component NAL unit type, or the view identifier of the NAL unit is marked as "required for anchor depth" ("NO" of 562), CDN device 16 may determine whether the NAL unit belongs to a non-anchor picture, the NAL unit belongs to the depth view component NAL unit type, and a view identifier (view id) of the NAL unit is not marked as "required for non-anchor depth" (564).

In response to determining that the NAL unit belongs to a non-anchor picture, the NAL unit belongs to the depth view component NAL unit type, and the view identifier of the NAL unit is not marked as "required for non-anchor depth" ("YES" of 564), CDN device 16 may mark the NAL unit as "to be removed from the bitstream" (554). In this way, CDN device 16 may mark a VCL NAL unit or a filler data NAL unit as "to be removed from the bitstream" if the anchor_pic_flag of the NAL unit is equal to 0, the nal_unit_type of the NAL unit is 21, and the view_id of the NAL unit is not marked as "required for non-anchor depth."

View identifiers marked as "required for non-anchor depth" are view identifiers in the non-anchor depth target view list. Thus, CDN device 16 may determine, based at least in part on whether the NAL unit belongs to an anchor picture, whether the NAL unit belongs to the depth view component NAL unit type, and whether the non-anchor depth target view list specifies the view identifier of the NAL unit, whether to remove the NAL unit from the 3DV bitstream. For instance, CDN device 16 may determine that the NAL unit is to be removed from the 3DV bitstream when the anchor picture flag syntax element in the header of the NAL unit is equal to 0, the NAL unit type syntax element in the header of the NAL unit is equal to 21, and the view identifier syntax element in the header of the NAL unit is equal to a view identifier of a view in the non-anchor depth target list.

In response to determining that the NAL unit does not belong to a non-anchor picture, the NAL unit does not belong to the depth view component NAL unit type, or the view identifier of the NAL unit is marked as "required for non-anchor depth" ("NO" of 564), CDN device 16 may determine whether a NAL reference indicator (nal_ref_idc) of the NAL unit is equal to 0, an inter-view flag (inter view flag) of the NAL unit is equal to 0, and a view identifier of the NAL unit is equal to any value in the view identifier target list (viewIdTargetList) (566).

In response to determining that the NAL reference indicator of the NAL unit is equal to 0, an inter-view flag of the NAL unit is equal to 0, and a view identifier of the NAL unit is equal to any value in the view identifier target list ("YES" of 566), CDN device 16 may mark the NAL unit as "to be removed from the bitstream" (554). In this way, CDN device 16 may mark a VCL NAL unit or a filler data NAL unit as "to be removed from the bitstream" if the nal_ref_idc of the NAL unit is equal to 0 and the inter_view flag is equal to 0 and the view id of the NAL unit is not equal to any value in the list viewIdTargetList.

Thus, CDN device 16 may determine that a NAL unit is to be removed from a 3DV bitstream when an anchor picture flag syntax element in a header of the NAL unit is equal to 1, a NAL unit type syntax element in the header of the NAL unit is equal to 21, and a view identifier syntax element in the header of the NAL unit is equal to a view identifier of a view in the anchor depth target list. Furthermore, CDN device 16 may determine that the NAL unit is to be removed from the 3DV bitstream when the anchor picture flag syntax element in the header of the NAL unit is equal to 0, the NAL unit type syntax element in the header of the NAL unit is equal to 21, and the view identifier syntax element in the header of the NAL unit is equal to a view identifier of a view in the non-anchor depth target list.

On the other hand, in response to determining that the NAL reference indicator of the NAL unit is not equal to 0, the inter-view flag of the NAL unit is not equal to 0, or the view identifier of the NAL unit is not equal to any value in the view identifier target list ("NO" of 566), CDN device 16 may determine whether the NAL unit type of the NAL unit is equal to 21 and a depth present flag target (depthPresentFlagTarget) is equal to 0 (568). In response to determining that the NAL unit type of the NAL unit is equal to 21 and the depth present flag target is equal to 0 ("YES" of 568), CDN device 16 may mark the NAL unit as "to be removed from the bitstream" (554). In this way, CDN device 16 may mark a VCL NAL unit or a filler data NAL unit as "to be removed from the bitstream" if the nal_unit_type of the NAL unit is equal to 21 and depthPresentFlagTarget is equal to 0.

In response to determining that the NAL unit type of the NAL unit is not equal to 21 or the depth present flag target is not equal to 0 ("NO" of 568), CDN device 16 may determine whether the depth present flag target is equal to 1 (570). In response to determining that the depth present flag target is equal to 1 ("YES" of 570), CDN device 16 may mark the NAL unit as "to be removed from the bitstream" (554). Otherwise, in response to determining that the depth present flag is not equal to 1 ("NO" of 570), CDN device 16 may not mark the NAL unit as "to be removed from the bitstream" (572). In this way, CDN device 16 may mark a VCL NAL unit or a filler data NAL unit as "to be removed from the bitstream" if the depthPresentFlagTarget is equal to 1.

FIG. 12 is a flowchart illustrating a second example operation 600 to mark VCL NAL units and filler data NAL units as to be removed from a bitstream, in accordance with one or more techniques of this disclosure. CDN device 16 may perform the example operation of FIG. 12 instead of performing the example operation of FIG. 11. Operation 600 may take into consideration the use syntax flag (use_texture_flag) syntax element. That is, when CDN device 16 performs a sub-bitstream extraction operation that uses operation 600 to determine VCL NAL units and filler data NAL units to remove from the bitstream, CDN device may determine, based at least in part on a use texture flag syntax element in a header of a NAL unit, whether to remove the NAL unit from a 3DV bitstream. As previously indicated, the use texture flag syntax element may indicate whether a depth view component encapsulated by the NAL unit is decodable without decoding a texture view component that corresponds to the depth view component. CDN device 16 may perform the operation of FIG. 12 as at least part of performing action 316 in the example of FIG. 5. The following description of FIG. 12 may be applicable to VCL NAL units and filler data NAL units.

As illustrated in the example of FIG. 12, CDN device 16 may determine whether a priority identifier (priority_id) of the NAL unit is greater than pIdTarget (602). As discussed above, the MVC NAL unit header extension of the NAL unit includes the priority id syntax element. pIdTarget is a parameter that is provided to the sub-bitstream extraction process, such as sub-bitstream extraction process 298 of FIG. 5. pIdTarget may identify a target priority level. In response to determining that the priority identifier of the NAL unit is greater than pIdTarget ("YES" of 602), CDN device 16 may mark the NAL unit as "to be removed from the bitstream" (604). In this way, CDN device 16 may mark a VCL NAL unit or a filler data NAL unit as "to be removed from the bitstream" if the priority id of the NAL unit is greater than pIdTarget.

On the other hand, in response to determining that the priority identifier of the NAL unit is not greater than pIdTarget ("NO" of 602), CDN device 16 may determine whether a temporal identifier (temporal_id) of the NAL unit is greater than tIdTarget (606). As discussed above, the MVC NAL unit header extension of the NAL unit includes the temporal_id syntax element and the tIdTarget is a parameter that is provided to the sub-bitstream extraction process, such as sub-bitstream extraction process 298. tIdTarget may identify a target temporal level. In response to determining that the temporal identifier of the NAL unit is greater than tIdTarget ("YES" of 606), CDN device 16 may mark the NAL unit as "to be removed from the bitstream" (604). In this way, CDN device 16 may mark a VCL NAL unit or a filler data NAL unit as "to be removed from the bitstream" if the temporal_id of the NAL unit is greater than tIdTarget.

In response to determining that the temporal identifier of the NAL unit is not greater than tIdTarget ("NO" of 606), CDN device 16 may, in accordance with the techniques of this disclosure, determine whether the NAL unit belongs to an anchor picture, the NAL unit belongs to a NAL unit type other than the depth view component NAL unit type, a view identifier (view_id) of the NAL unit is not marked as "required for anchor texture," and the use texture flag (use_texture_flag) is 0 or the view identifier is not marked as "required for anchor depth" (608). CDN device 16 may determine, based on an anchor picture flag (anchor_pic_flag) of the NAL unit, whether the NAL unit belongs to an anchor picture. NAL units belonging to the depth view component NAL unit type may include coded slice extensions for depth view components. In some examples, NAL units having nal_unit_type equal to 21 belong to the depth view component NAL unit type.

In response to determining that the NAL unit belongs to an anchor picture, the NAL unit belongs to a NAL unit type other than the depth view component NAL unit type, the view identifier of the NAL unit is not marked as "required for anchor texture," and the use texture flag (use_texture_flag) is 0 or the view identifier is not marked as "required for anchor depth" ("YES" of 608), CDN device 16 may mark the NAL unit as "to be removed from the bitstream" (604). In this way, CDN device 16 may mark a VCL NAL unit or a filler data NAL unit as "to be removed from the bitstream" if the anchor_pic_flag of the NAL unit is equal to 1, the nal_unit_type of the NAL unit is not 21, and both of the following two conditions are fulfilled: the view_id of the NAL unit is not marked as "required for anchor texture" and use_texture_flag is 0 or the view id of the NAL unit is not marked as "required for anchor depth."

However, in response to determining that the NAL unit does not belongs to an anchor picture, the NAL unit does belongs to the depth view component NAL unit type, the view identifier of the NAL unit is marked as "required for anchor texture," or the use texture flag is not 0 and the view identifier is marked as "required for anchor depth" ("NO" of 608), CDN device 16 may, in accordance with the techniques of this disclosure, determine whether the NAL unit belongs to a non-anchor picture, the NAL unit belongs to a NAL unit type other than the depth view component NAL unit type, a view identifier (view id) of the NAL unit is not marked as "required for non-anchor texture," and the use texture flag is 0 or the view identifier is not marked as "required for non-anchor depth" (610).

In response to determining that the NAL unit belongs to an anchor picture, the NAL unit belongs to a NAL unit type other than the depth view component NAL unit type, the view identifier of the NAL unit is not marked as "required for non-anchor texture," and the use texture flag is 0 or the view identifier is not marked as "required for non-anchor depth" ("YES" of 610), CDN device 16 may mark the NAL unit as "to be removed from the bitstream" (604). In this way, CDN device 16 may mark a VCL NAL unit or a filler data NAL unit as "to be removed from the bitstream" if the anchor_pic_flag of the NAL unit is equal to 0, the nal_unit_type of the NAL unit is not 21, and both of the following two conditions are fulfilled: the view_id of the NAL unit is not marked as "required for non-anchor texture" and the use_texture_flag is 0 or the view id of the NAL unit is not marked as "required for non-anchor depth."

In response to determining that the NAL unit does not belong to an anchor picture, the NAL unit belongs to the depth view component NAL unit type, the view identifier of the NAL unit is marked as "required for non-anchor texture," or the use texture flag is not 1 and the view identifier is marked as "required for non-anchor depth" ("NO" of 610), CDN device 16 may determine whether the NAL unit belongs to an anchor picture, the NAL unit belongs to the depth view component NAL unit type, and a view identifier (view id) of the NAL unit is not marked as "required for anchor depth" (612).

In response to determining that the NAL unit belongs to an anchor picture, the NAL unit belongs to the depth view component NAL unit type, and the view identifier of the NAL unit is not marked as "required for anchor depth" ("YES" of 612), CDN device 16 may mark the NAL unit as "to be removed from the bitstream" (604). In this way, CDN device 16 may mark a VCL NAL unit or a filler data NAL unit as "to be removed from the bitstream" if the anchor_pic_flag of the NAL unit is equal to 1, the nal_unit_type of the NAL unit is 21, and the view_id of the NAL unit is not marked as "required for anchor depth."

Thus, CDN device 16 may determine that the NAL unit is to be removed from the 3DV bitstream when an anchor picture flag syntax element in a header of the NAL unit is equal to 1, a NAL unit type syntax element in the header of the NAL unit is equal to 21, a view identifier syntax element in the header of the NAL unit is not equal to a view identifier of any view in the anchor texture target list, and the use texture flag syntax element in the header of the NAL unit is equal to 0 or the view identifier syntax element in the header of the NAL unit is not equal to a view identifier of any view in the anchor depth target list.

Furthermore, in response to determining that the NAL unit does not belong to an anchor picture, the NAL unit does not belong to the depth view component NAL unit type, or the view identifier of the NAL unit is marked as "required for anchor depth" ("NO" of 612), CDN device 16 may determine whether the NAL unit belongs to a non-anchor picture, the NAL unit belongs to the depth view component NAL unit type, and a view identifier (view id) of the NAL unit is not marked as "required for non-anchor depth" (614).

In response to determining that the NAL unit belongs to a non-anchor picture, the NAL unit belongs to the depth view component NAL unit type, and the view identifier of the NAL unit is not marked as "required for non-anchor depth" ("YES" of 614), CDN device 16 may mark the NAL unit as "to be removed from the bitstream" (604). In this way, CDN device 16 may mark all VCL NAL units and filler data NAL units for which the anchor picture flag of the NAL unit is equal to 0, the nal_unit_type of the NAL unit is equal to 21, and the view identifier of the NAL unit is not marked as "required for non-anchor depth" as "to be removed from the bitstream."

Thus, CDN device 16 may determine that the NAL unit is to be removed from the 3DV bitstream when the anchor picture flag syntax element in the header of the NAL unit is equal to 0, the NAL unit type syntax element in the header of the NAL unit is equal to 21, the view identifier syntax element in the header of the NAL unit is not equal to a view identifier of any view in the anchor texture target list, and the use texture flag syntax element in the header of the NAL unit is equal to 0 or the view identifier syntax element in the header of the NAL unit is not equal to a view identifier of any view in the non-anchor depth target list.

In response to determining that the NAL unit does not being to a non-anchor picture, the NAL unit does not belong to the depth view component NAL unit type, or the view identifier of the NAL unit is marked as "required for non-anchor depth" ("NO" of 614), CDN device 16 may determine whether a NAL reference indicator (nal_ref_idc) of the NAL unit is equal to 0, an inter-view flag (inter view flag) of the NAL unit is equal to 0, and a view identifier of the NAL unit is equal to any value in the view identifier target list (viewIdTargetList) (616). In response to determining that the NAL reference indicator of the NAL unit is equal to 0, an inter-view flag of the NAL unit is equal to 0, and a view identifier of the NAL unit is equal to any value in the view identifier target list ("YES" of 616), CDN device 16 may mark the NAL unit as "to be removed from the bitstream" (604). In this way, CDN device 16 may mark all VCL NAL units and filler data NAL units for which the NAL reference indicator of the NAL unit is equal to 0, an inter-view flag of the NAL unit is equal to 0, and a view identifier of the NAL unit is equal to any value in the view identifier target list as "to be removed from the bitstream."

On the other hand, in response to determining that the NAL reference indicator of the NAL unit is not equal to 0, the inter-view flag of the NAL unit is not equal to 0, or the view identifier of the NAL unit is not equal to any value in the view identifier target list ("NO" of 616), CDN device 16 may determine whether the NAL unit type of the NAL unit is equal to 21 and a depth present flag target (depthPresentFlagTarget) is equal to 0 (618). In response to determining that the NAL unit type of the NAL unit is equal to 21 and the depth present flag target is equal to 0 ("YES" of 618), CDN device 16 may mark the NAL unit as "to be removed from the bitstream" (604). In this way, CDN device 16 may mark all VCL NAL units and filler data NAL units for which the NAL unit type of the NAL unit is equal to 21 and the depth present flag target is equal to 0 as "to be removed from the bitstream."

In response to determining that the NAL unit type of the NAL unit is not equal to 21 or the depth present flag target is not equal to 0 ("NO" of 618), CDN device 16 may determine whether the depth present flag target is equal to 1 (620). In response to determining that the depth present flag target is equal to 1 ("YES" of 620), CDN device 16 may mark the NAL unit as "to be removed from the bitstream" (604). In this way, CDN device 16 may mark all VCL NAL units and filler data NAL units for which depthPresentFlagTarget is equal to 1 as "to be removed from the bitstream." Otherwise, in response to determining that the depth present flag is not equal to 1 ("NO" of 620), CDN device 16 may not mark the NAL unit as "to be removed from the bitstream" (622).

In other examples, NAL unit headers do not include use_texture_flag syntax elements. In such examples, CDN device 16 may use depth_to_view_flag syntax elements of texture view components to derive the value of the use_texture_flag. In other words, the use_texture_flag is not signaled in the NAL unit header and depth_to_view_flag in the texture view component is used to derive the value of the use_texture_flag. In some examples, the use_texture_flag is derived to be equal to the depth_to_view_flag.

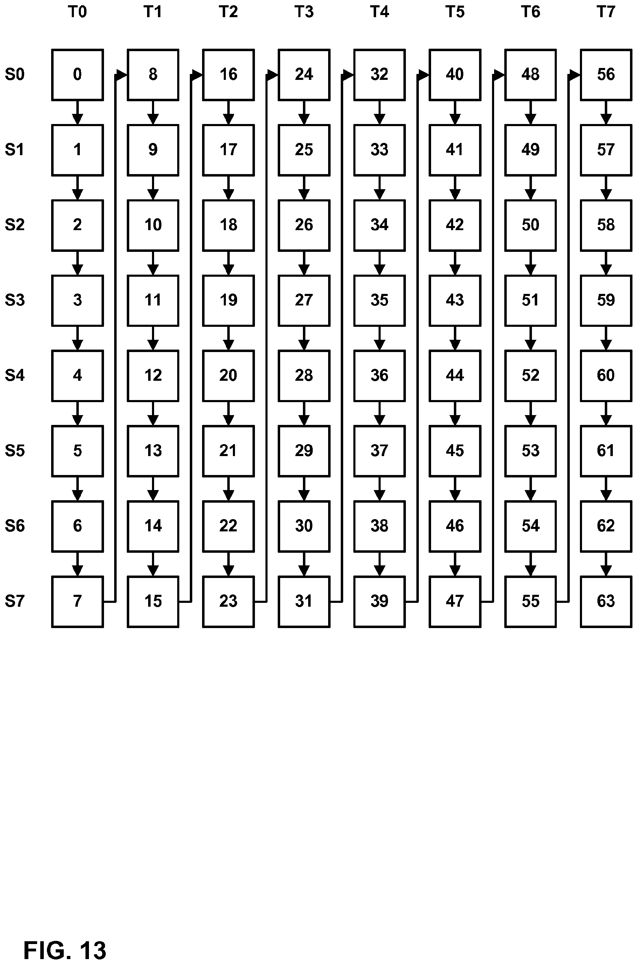

FIG. 13 is a conceptual diagram that illustrates an example MVC decoding order. In the example of FIG. 13, each square corresponds to a view component. Each of the view components may include a texture view component and a depth view component. Columns of squares correspond to access units. Each access unit may be defined to contain the coded pictures of all the views of a time instance. Rows of squares correspond to views. In the example of FIG. 13, the access units are labeled T0...T7 and the views are labeled S0...S7. Because each view component of an access unit is decoded before any view component of the next access unit, the decoding order of FIG. 13 may be referred to as time-first coding. As shown in the example of FIG. 13, the decoding order of access units may not be identical to the output or display order of the views.

As mentioned above, a view order index is an index that indicates the decoding order of view components in an access unit. Thus, in the example of FIG. 13, the view order index of view components in view S0 may be 0, the view order index of view components in view S1 may be 1, the view order index of view components in view S2 may be 2, and so on.

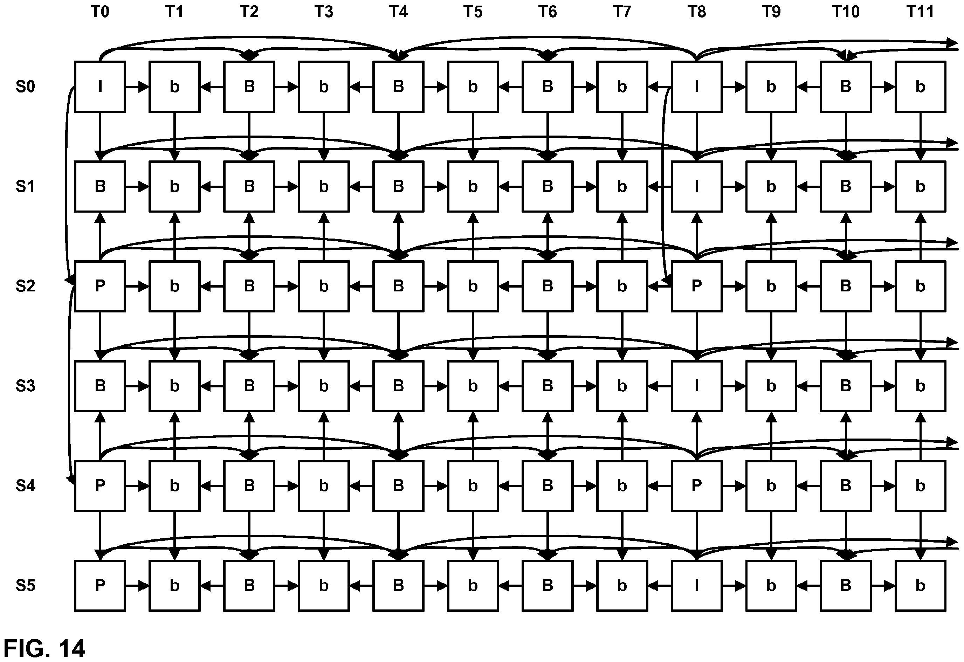

FIG. 14 is a conceptual diagram illustrating an example MVC temporal and inter-view prediction structure. That is, a typical MVC prediction (including both inter-picture prediction within each view and inter-view prediction) structure for multi-view video coding is shown in FIG. 14. In the example of FIG. 14, each square corresponds to a view component. Each of the view components may include a texture view component and a depth view component. Squares labeled "I" are intra predicted view components. Squares labeled "P" are uni-directionally inter predicted view components. Squares labeled "B" and "b" are bi-directionally inter predicted view components. Squares labeled "b" may use squares labeled "B" as reference pictures. Predictions are indicated by arrows, the pointed-to object using the pointed-from object for prediction reference. For instance, an arrow that points from a first square to a second square indicates that the first square is available in inter prediction as a reference picture for the second square. As indicated by the vertical arrows in FIG. 14, view components in different views of the same access unit may be available as reference pictures. The use of one view component of an access unit as a reference picture for another view component of the same access unit may be referred to as inter-view prediction.

A video coder may perform a reference picture list construction process to flexibly arrange temporal and view prediction references. Performing the reference picture list construction process may provide not only potential coding efficiency gains but also error resilience, because reference picture sections and redundant picture mechanisms can then be extended to the view dimension.

The reference picture list construction may include the following steps. First, the video coder may apply the reference picture list initialization process for temporal (intra-view) reference pictures as specified in a H.264/AVC standard, without use of reference pictures from other views. Second, the video coder may append the inter-view reference pictures to the end of the list in the order the inter-view reference pictures occur in the SPS MVC extension. Third, the video coder applies the reference picture list modification (RPLM) process for both intra-view and inter-view reference pictures. The video coder may identify inter-view reference pictures in RPLM commands by their index values as specified in the MVC SPS extension.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

Various examples have been described. These and other examples are within the scope of the following claims.

## Claims

1. A method of extracting a sub-bitstream from a three-dimensional video, 3DV, bitstream that includes coded texture view components and coded depth view components, the method comprising:
determining a first list that indicates views in the 3DV bitstream, the views indicated by the first list having texture view components that are required for decoding pictures in a plurality of target views, the plurality of target views comprising a subset of the views in the 3DV bitstream that are decodable from the sub-bitstream; determining a separate, second list that indicates views in the 3DV bitstream, the views indicated by the second list having depth view components that are required for decoding pictures in the plurality of target views, the first list and the second list indicating different subsets of the views in the 3DV bitstream; and
determining the sub-bitstream based at least in part on the first list and the second list.

2. The method of claim 1, wherein:
the first list includes view identifiers that identify the views in the 3DV bitstream that have texture view components that are required for decoding pictures in the plurality of target views,
the second list includes view identifiers that identify the views in the 3DV bitstream that have depth view components that are required for decoding pictures in the plurality of target views, and
the first list includes one or more view identifiers that are different than the view identifiers in the depth target view list.

3. The method of claim 1, wherein:
a sequence parameter set, SPS, specifies potential dependencies between views and view components applicable to the SPS;
determining the first list comprises determining, based at least in part on the plurality of target views and the potential dependencies specified by the SPS, the first list; and
determining te second list comprises determining, based at least in part on the plurality of target views and the potential dependencies specified by the SPS, the second list.

4. The method of claim 1, wherein the 3DV bitstream comprises a series of network abstraction layer, NAL, units and determining the sub-bitstream comprises determining, based at least in part on whether the first list or the second list specifies a view identifier of a NAL unit, whether to remove the NAL unit from the 3DV bitstream.

5. The method of claim 4, wherein determining the first list and the second list comprises:
determining an anchor texture target view list that indicates views in the 3DV bitstream that have texture view components that are required for decoding of anchor pictures in the plurality of target views;
determining a non-anchor texture target view list that indicates views in the 3DV bitstream that have texture view components that are required for decoding of non-anchor pictures in the plurality of target views;
determining an anchor depth target view list that indicates views in the 3DV bitstream that have depth view components that are required for decoding of the anchor pictures in the plurality of target views; and
determining a non-anchor depth target view list that indicates views in the 3DV bitstream that have depth view components that are required for decoding of the non-anchor pictures in the plurality of target views.

6. The method of claim 5, wherein determining whether to remove the NAL unit from the 3DV bitstream comprises:
determining, based at least in part on whether the NAL unit belongs to an anchor picture, whether the NAL unit belongs to a depth view component NAL unit type, and whether the anchor texture target view list specifies the view identifier of the NAL unit, whether to remove the NAL unit from the 3DV bitstream, wherein NAL units belonging to the depth view component NAL unit type encapsulate coded slice extensions for depth view components; and
determining, based at least in part on whether the NAL unit belongs to an anchor picture, whether the NAL unit belongs to the depth view component NAL unit type, and whether the non-anchor texture target view list specifies the view identifier of the NAL unit, whether to remove the NAL unit from the 3DV bitstream.

7. The method of claim 6, wherein determining whether to remove the NAL unit from the 3DV bitstream comprises:
determining that the NAL unit is to be removed from the 3DV bitstream when an anchor picture flag syntax element in a header of the NAL unit is equal to 1, a NAL unit type syntax element in the header of the NAL unit is not equal to 21, and a view identifier syntax element in the header of the NAL unit is equal to a view identifier of a view in the anchor texture target list; and
determining that the NAL unit is to be removed from the 3DV bitstream when the anchor picture flag syntax element in the header of the NAL unit is equal to 0, the NAL unit type syntax element in the header of the NAL unit is not equal to 21, and the view identifier syntax element in the header of the NAL unit is equal to a view identifier of a view in the non-anchor texture target list.

8. The method of claim 5, wherein determining whether to remove the NAL unit from the 3DV bitstream comprises:
determining, based at least in part on whether the NAL unit belongs to an anchor picture, whether the NAL unit belongs to a depth view component NAL unit type, and whether the anchor depth target view list specifies the view identifier of the NAL unit, whether to remove the NAL unit from the 3DV bitstream, wherein NAL units belonging to the depth view component NAL unit type encapsulate coded slice extensions for depth view components; and
determining, based at least in part on whether the NAL unit belongs to an anchor picture, whether the NAL unit belongs to the depth view component NAL unit type, and whether the non-anchor depth target view list specifies the view identifier of the NAL unit, whether to remove the NAL unit from the 3DV bitstream.

9. The method of claim 8, wherein determining whether to remove the NAL unit from the 3DV bitstream comprises:
determining that the NAL unit is to be removed from the 3DV bitstream when an anchor picture flag syntax element in a header of the NAL unit is equal to 1, a NAL unit type syntax element in the header of the NAL unit is equal to 21, and a view identifier syntax element in the header of the NAL unit is equal to a view identifier of a view in the anchor depth target list; and
determining that the NAL unit is to be removed from the 3DV bitstream when the anchor picture flag syntax element in the header of the NAL unit is equal to 0, the NAL unit type syntax element in the header of the NAL unit is equal to 21, and the view identifier syntax element in the header of the NAL unit is equal to a view identifier of a view in the non-anchor depth target list.

10. The method of claim 1, wherein the method is performed by a content delivery network, CDN, device.

11. A device comprising:
means for determining a first list that indicates views in a three-dimensional video, 3DV, bitstream, the views indicated by the first list having texture view components that are required for decoding pictures in a plurality of target views, the plurality of target views comprising a subset of the views in the 3DV bitstream that are decodable from the sub-bitstream, the 3DV bitstream including coded texture view components and coded depth view components;
means for determining a separate, second list that indicates views in the 3DV bitstream, the views indicated by the second list having depth view components that are required for decoding pictures in the plurality of target views, the first list and the second list indicating different subsets of the views in the 3DV bitstream; and
means for determining the sub-bitstream based at least in part on the first list and the second list.

12. The device of claim 11, wherein the 3DV bitstream comprises a series of network abstraction layer, NAL, units and the means for determining the sub-bitstream comprises means for determining, based at least in part on whether the first list or the second list specifies a view identifier of a NAL unit, whether to remove the NAL unit from the 3DV bitstream.

13. The device of claim 12, wherein the means for determining the first list comprises:
means for determining an anchor texture target view list that indicates views in the 3DV bitstream that have texture view components that are required for decoding of anchor pictures in the plurality of target views;
means for determining a non-anchor texture target view list that indicates views in the 3DV bitstream that have texture view components that are required for decoding of non-anchor pictures in the plurality of target views;
means for determining an anchor depth target view list that indicates views in the 3DV bitstream that have depth view components that are required for decoding of the anchor pictures in the plurality of target views; and
means for determining a non-anchor depth target view list that indicates views in the 3DV bitstream that have depth view components that are required for decoding of the non-anchor pictures in the plurality of target views.

14. The device of claim 13, wherein the means for determining whether to remove the NAL unit from the 3DV bitstream comprises:
means for determining, based at least in part on whether the NAL unit belongs to an anchor picture, whether the NAL unit belongs to a depth view component NAL unit type, and whether the anchor texture target view list specifies the view identifier of the NAL unit, whether to remove the NAL unit from the 3DV bitstream, wherein NAL units belonging to the depth view component NAL unit type encapsulate coded slice extensions for depth view components; and
means for determining, based at least in part on whether the NAL unit belongs to an anchor picture, whether the NAL unit belongs to the depth view component NAL unit type, and whether the non-anchor texture target view list specifies the view identifier of the NAL unit, whether to remove the NAL unit from the 3DV bitstream.

15. A computer-readable storage medium that stores instructions that, when executed by one or more processors of a device, configure the device to:
determine a first list that indicates views in a 3DV bitstream, the views indicated by the first list having texture view components that are required for decoding pictures in a plurality of target views, the plurality of target views comprising a subset of the views in the 3DV bitstream that are decodable from the sub-bitstream, the 3DV bitstream including coded texture view components and coded depth view components;
determine a separate, second list that indicates views in the 3DV bitstream, the views indicated by the second list having depth view components that are required for decoding pictures in the plurality of target views, the first list and the second list indicating different subsets of the views in the 3DV bitstream; and
determine the sub-bitstream based at least in part on the first list and the second list.

## Patentansprüche

1. Verfahren zum Extrahieren eines Subbitstroms aus einem 3DV-(dreidimensionalen Video)-Bitstrom, der codierte Texturansichtskomponenten und codierte Tiefenansichtskomponenten beinhaltet, wobei das Verfahren Folgendes beinhaltet:
Bestimmen einer ersten Liste, die Ansichten im 3DV-Bitstrom anzeigt, wobei die von der ersten Liste angezeigten Ansichten Texturansichtskomponenten haben, die zum Decodieren von Bildern in mehreren Zielansichten benötigt werden, wobei die mehreren Zielansichten einen Teilsatz der Ansichten im 3DV-Bitstrom umfassen, die von dem Subbitstrom decodiert werden können;
Bestimmen einer separaten zweiten Liste, die Ansichten im 3DV-Bitstrom anzeigt, wobei die von der zweiten Liste angezeigten Ansichten Tiefenansichtskomponenten haben, die zum Decodieren von Bildern in den mehreren Zielansichten benötigt werden, wobei die erste Liste und die zweite Liste unterschiedliche Teilsätze der Ansichten im 3DV-Bitstrom anzeigen; und
Bestimmen des Subbitstroms wenigstens teilweise auf der Basis der ersten Liste und der zweiten Liste.

2. Verfahren nach Anspruch 1, wobei:
die erste Liste Ansichtsidentifikatoren beinhaltet, die die Ansichten im 3DV-Bitstrom identifizieren, die Texturansichtskomponenten haben, die zum Decodieren von Bildern in den mehreren Zielansichten benötigt werden,
die zweite Liste Ansichtsidentifikatoren aufweist, die die Ansichten im 3DV-Bitstrom identifizieren, die Tiefenansichtskomponenten haben, die zum Decodieren von Bildern in den mehreren Zielansichten benötigt werden, und
die erste Liste eine oder mehrere Ansichtsidentifikatoren aufweist, die sich von den Ansichtsidentifikatoren in der Tiefenzielansichtsliste unterscheiden.

3. Verfahren nach Anspruch 1, wobei:
ein Sequenzparametersatz SPS potentielle Abhängigkeiten zwischen Ansichten und Ansichtskomponenten spezifiziert, die auf den SPS anwendbar sind;
das Bestimmen der ersten Liste das Bestimmen, wenigstens teilweise auf der Basis der mehreren Zielansichten und der potentiellen Abhängigkeiten, die vom SPS spezifiziert werden, der ersten Liste beinhaltet; und
das Bestimmen der zweiten Liste das Bestimmen, wenigstens teilweise auf der Basis der mehreren Zielansichten und der potentiellen Abhängigkeiten, die vom SPS spezifiziert werden, der zweiten Liste beinhaltet.

4. Verfahren nach Anspruch 1, wobei der 3DV-Bitstrom eine Serie von NAL-(Network Abstraction Layer)-Einheiten umfasst und das Bestimmen des Subbitstroms das Bestimmen, wenigstens teilweise auf der Basis davon, ob die erste Liste oder die zweite Liste einen Ansichtsidentifikator einer NAL-Einheit spezifiziert, beinhaltet, ob die NAL-Einheit aus dem 3DV-Bitstrom zu entfernen ist.

5. Verfahren nach Anspruch 4, wobei das Bestimmen der ersten Liste und der zweiten Liste Folgendes beinhaltet:
Bestimmen einer Ankertextur-Zielansichtsliste, die Ansichten im 3DV-Bitstrom anzeigt, die Texturansichtskomponenten haben, die zum Decodieren von Ankerbildern in den mehreren Zielansichten benötigt werden;
Bestimmen einer Nichtankertextur-Zielansichtsliste, die Ansichten im 3DV-Bitstrom anzeigt, die Texturansichtskomponenten haben, die zum Decodieren von Nichtankerbildern in den mehreren Zielansichten benötigt werden;
Bestimmen einer Ankertiefen-Zielansichtsliste, die Ansichten im 3DV-Bitstrom anzeigt, die Tiefenansichtskomponenten haben, die zum Decodieren der Ankerbilder in den mehreren Zielansichten benötigt werden; und
Bestimmen einer Nichtankertiefen-Zielansichtsliste, die Ansichten im 3DV-Bitstrom anzeigt, die Tiefenansichtskomponenten haben, die zum Decodieren der Nichtankerbilder in den mehreren Zielansichten benötigt werden.

6. Verfahren nach Anspruch 5, wobei das Bestimmen, ob die NAL-Einheit aus dem 3DV-Bitstrom zu entfernen ist, Folgendes beinhaltet:
Bestimmen, wenigstens teilweise auf der Basis davon, ob die NAL-Einheit zu einem Ankerbild gehört, ob die NAL-Einheit zu einem Tiefenansichtskomponenten-NAL-Einheitstyp gehört und ob die Ankertextur-Zielansichtsliste den Ansichtsidentifikator der NAL-Einheit spezifiziert, ob die NAL-Einheit aus dem 3DV-Bitstrom zu entfernen ist, wobei zum Tiefenansichtskomponenten-NAL-Einheitstyp gehörende NAL-Einheiten codierte Slice-Erweiterungen für Tiefenansichtskomponenten verkapseln; und
Bestimmen, wenigstens teilweise auf der Basis davon, ob die NAL-Einheit zu einem Ankerbild gehört, ob die NAL-Einheit zum Tiefenansichtskomponenten-NAL-Einheitstyp gehört und ob die Nichtankertextur-Zielansichtsliste den Ansichtsidentifikator der NAL-Einheit spezifiziert, ob die NAL-Einheit aus dem 3DV-Bitstrom zu entfernen ist.

7. Verfahren nach Anspruch 6, wobei das Bestimmen, ob die NAL-Einheit aus dem 3DV-Bitstrom zu entfernen ist, Folgendes beinhaltet:
Bestimmen, dass die NAL-Einheit aus dem 3DV-Bitstrom zu entfernen ist, wenn ein Ankerbildflag-Syntaxelement in einem Header der NAL-Einheit gleich 1 ist, ein NAL-Einheitstyp-Syntaxelement im Header der NAL-Einheit nicht gleich 21 ist und ein Ansichtsidentifikator-Syntaxelement im Header der NAL-Einheit gleich einem Ansichtsidentifikator einer Ansicht in der Ankertexturzielliste ist; und
Bestimmen, dass die NAL-Einheit aus dem 3DV-Bitstrom zu entfernen ist, wenn das Ankerbildflag-Syntaxelement im Header der NAL-Einheit gleich 0 ist, das NAL-Einheitstyp-Syntaxelement im Header der NAL-Einheit nicht gleich 21 ist und das Ansichtsidentifikator-Syntaxelement im Header der NAL-Einheit gleich einem Ansichtsidentifikator einer Ansicht in der Nichtankertexturzielliste ist.

8. Verfahren nach Anspruch 5, wobei das Bestimmen, ob die NAL-Einheit aus dem 3DV-Bitstrom zu entfernen ist, Folgendes beinhaltet:
Bestimmen, wenigstens teilweise auf der Basis davon, ob die NAL-Einheit zu einem Ankerbild gehört, ob die NAL-Einheit zu einem Tiefenansichtskomponenten-NAL-Einheitstyp gehört und ob die Ankertiefen-Zielansichtsliste den Ansichtsidentifikator der NAL-Einheit spezifiziert, ob die NAL-Einheit aus dem 3DV-Bitstrom zu entfernen ist, wobei zum Tiefenansichtskomponenten-NAL-Einheitstyp gehörende NAL-Einheiten codierte Slice-Erweiterungen für Tiefenansichtskomponenten verkapseln; und
Bestimmen, wenigstens teilweise auf der Basis davon, ob die NAL-Einheit zu einem Ankerbild gehört, ob die NAL-Einheit zum Tiefenansichtskomponenten-NAL-Einheitstyp gehört und ob die Nichtankertiefen-Zielansichtsliste den Ansichtsidentifikator der NAL-Einheit spezifiziert, ob die NAL-Einheit aus dem 3DV-Bitstrom zu entfernen ist.

9. Verfahren nach Anspruch 8, wobei das Bestimmen, ob die NAL-Einheit aus dem 3DV-Bitstrom zu entfernen ist, Folgendes beinhaltet:
Bestimmen, dass die NAL-Einheit aus dem 3DV-Bitstrom zu entfernen ist, wenn ein Ankerbildflag-Syntaxelement in einem Header der NAL-Einheit gleich 1 ist, ein NAL-Einheitstyp-Syntaxelement im Header der NAL-Einheit gleich 21 ist und ein Ansichtsidentifikator-Syntaxelement im Header der NAL-Einheit gleich einem Ansichtsidentifikator einer Ansicht in der Ankertiefenzielliste ist; und
Bestimmen, dass die NAL-Einheit aus dem 3DV-Bitstrom zu entfernen ist, wenn das Ankerbildflag-Syntaxelement im Header der NAL-Einheit gleich 0 ist, das NAL-Einheitstyp-Syntaxelement im Header der NAL-Einheit gleich 21 ist und das Ansichtsidentifikator-Syntaxelement im Header der NAL-Einheit gleich einem Ansichtsidentifikator einer Ansicht in der Nichtankertiefenzielliste ist.

10. Verfahren nach Anspruch 1, wobei das Verfahren von einem CDN-(Content Delivery Network)-Gerät durchgeführt wird.

11. Gerät, das Folgendes umfasst:
Mittel zum Bestimmen einer ersten Liste, die Ansichten in einem 3DV-(dreidimensionalen Video)-Bitstrom anzeigt, wobei die von der ersten Liste angezeigten Ansichten Texturansichtskomponenten haben, die zum Decodieren von Bildern in mehreren Zielansichten benötigt werden, wobei die mehreren Zielansichten einen Teilsatz der Ansichten im 3DV-Bitstrom umfassen, die von dem Subbitstrom decodiert werden können,
wobei der 3DV-Bitstrom codierte Texturansichtskomponenten und codierte Tiefenansichtskomponenten beinhaltet;
Mittel zum Bestimmen einer separaten, zweiten Liste, die Ansichten im 3DV-Bitstrom anzeigt, wobei die von der zweiten Liste angezeigten Ansichten Tiefenansichtskomponenten haben, die zum Decodieren von Bildern in den mehreren Zielansichten benötigt werden, wobei die erste Liste und die zweite Liste unterschiedliche Teilsätze der Ansichten im 3DV-Bitstrom anzeigen; und
Mittel zum Bestimmen des Subbitstroms wenigstens teilweise auf der Basis der ersten Liste und der zweiten Liste.

12. Gerät nach Anspruch 11, wobei der 3DV-Bitstrom eine Serie von NAL-(Network Abstraction Layer)-Einheiten umfasst und das Mittel zum Bestimmen des Subbitstroms Mittel zum Bestimmen beinhaltet, wenigstens teilweise auf der Basis davon, ob die erste Liste oder die zweite Liste einen Ansichtidentifikator einer NAL-Einheit spezifiziert, ob die NAL-Einheit aus dem 3DV-Bitstrom zu entfernen ist.

13. Gerät nach Anspruch 12, wobei das Mittel zum Bestimmen der ersten Liste Folgendes umfasst:
Mittel zum Bestimmen einer Ankertextur-Zielansichtsliste, die Ansichten im 3DV-Bitstrom anzeigt, die Texturansichtskomponenten haben, die zum Decodieren von Ankerbildern in den mehreren Zielansichten benötigt werden;
Mittel zum Bestimmen einer Nichtankertextur-Zielansichtsliste, die Ansichten im 3DV-Bitstrom anzeigt, die Texturansichtskomponenten haben, die zum Decodieren von Nichtankerbildern in den mehreren Zielansichten benötigt werden;
Mittel zum Bestimmen einer Ankertiefen-Zielansichtsliste, die Ansichten im 3DV-Bitstrom anzeigt, die Tiefenansichtskomponenten haben, die zum Decodieren der Ankerbilder in den mehreren Zielansichten benötigt werden; und
Mittel zum Bestimmen einer Nichtankertiefen-Zielansichtsliste, die Ansichten im 3DV-Bitstrom anzeigt, die Tiefenansichtskomponenten haben, die zum Decodieren der Nichtankerbilder in den mehreren Zielansichten benötigt werden.

14. Gerät nach Anspruch 13, wobei das Mittel zum Bestimmen, ob die NAL-Einheit aus dem 3DV-Bitstrom zu entfernen ist, Folgendes umfasst:
Mittel zum Bestimmen, wenigstens teilweise auf der Basis davon, ob die NAL-Einheit zu einem Ankerbild gehört, ob die NAL-Einheit zu einem Tiefenansichtskomponenten-NAL-Einheitstyp gehört und ob die Ankertextur-Zielansichtsliste den Ansichtidentifikator der NAL-Einheit spezifiziert, ob die NAL-Einheit aus dem 3DV-Bitstrom zu entfernen ist, wobei zum Tiefenansichtskomponenten-NAL-Einheitstyp gehörende NAL-Einheiten codierte Slice-Erweiterungen für Tiefenansichtskomponenten verkapseln; und
Mittel zum Bestimmen, wenigstens teilweise auf der Basis davon, ob die NAL-Einheit zu einem Ankerbild gehört, ob die NAL-Einheit zum Tiefenansichtskomponenten-NAL-Einheitstyp gehört und ob die Nichtankertextur-Zielansichtsliste den Ansichtsidentifikator der NAL-Einheit spezifiziert, ob die NAL-Einheit aus dem 3DV-Bitstrom zu entfernen ist.

15. Computerlesbares Speichermedium, das Befehle speichert, die bei Ausführung durch einen oder mehrere Prozessoren eines Geräts so konfiguriert sind, dass das Gerät Folgendes ausführt:
Bestimmen einer ersten Liste, die Ansichten in einem 3DV-Bitstrom anzeigt, wobei die durch die erste Liste angezeigten Ansichten Texturansichtskomponenten haben, die zum Decodieren von Bildern in mehreren Zielansichten benötigt werden, wobei die mehreren Zielansichten einen Teilsatz der Ansichten im 3DV-Bitstrom umfassen, die aus dem Subbitstrom decodiert werden können, wobei der 3DV-Bitstrom codierte Texturansichtskomponenten und codierte Tiefenansichtskomponenten beinhaltet;
Bestimmen einer separaten, zweiten Liste, die Ansichten im 3DV-Bitstrom anzeigt, wobei die von der zweiten Liste angezeigten Ansichten Tiefenansichtskomponenten haben, die zum Decodieren von Bildern in den mehreren Zielansichten benötigt werden, wobei die erste Liste und die zweite Liste unterschiedliche Teilsätze der Ansichten im 3DV-Bitstrom anzeigen; und
Bestimmen des Subbitstroms wenigstens teilweise auf der Basis der ersten Liste und der zweiten Liste.

## Revendications

1. Procédé d'extraction d'un sous-flux binaire à partir d'un flux binaire vidéo tridimensionnel, 3DV, qui comporte des composantes de vue de texture codées et des composantes de vue de profondeur codées, le procédé comprenant :
la détermination d'une première liste qui indique des vues dans le flux binaire 3DV, les vues indiquées par la première liste comportant des composantes de vue de texture qui sont requises pour décoder des images dans une pluralité de vues cibles, la pluralité de vues cibles comprenant un sous-ensemble des vues dans le flux binaire 3DV qui sont décodables à partir du sous-flux binaire ;
la détermination d'une seconde liste séparée qui indique des vues dans le flux binaire 3DV, les vues indiquées par la seconde liste comportant des composantes de vue de profondeur qui sont requises pour décoder des images dans la pluralité de vues cibles, la première liste et la seconde liste indiquant différents sous-ensembles des vues dans le flux binaire 3DV ; et
la détermination du sous-flux binaire en fonction au moins en partie de la première liste et de la seconde liste.

2. Procédé selon la revendication 1, dans lequel :
la première liste comporte des identifiants de vues qui identifient les vues dans le flux binaire 3DV qui ont des composantes de vue de texture qui sont requises pour décoder des images dans la pluralité de vues cibles,
la seconde liste comporte des identifiants de vues qui identifient les vues dans le flux binaire 3DV qui ont des composantes de vue de profondeur qui sont requises pour décoder des images dans la pluralité de vues cibles, et
la première liste comporte un ou plusieurs identifiants de vues qui sont différents des identifiants de vues dans la liste de vues cibles de profondeur.

3. Procédé selon la revendication 1, dans lequel :
un ensemble de paramètres de séquence, SPS, spécifie des dépendances potentielles entre des vues et des composantes de vues applicables au SPS ;
la détermination de la première liste comprend la détermination, en fonction au moins en partie de la pluralité de vues cibles et des dépendances potentielles spécifiées par le SPS, de la première liste ; et
la détermination de la seconde liste comprend la détermination, en fonction au moins en partie de la pluralité de vues cibles et des dépendances potentielles spécifiées par le SPS, de la seconde liste.

4. Procédé selon la revendication 1, dans lequel le flux binaire 3DV comprend une série d'unités de couche d'abstraction de réseau, NAL, et la détermination du sous-flux binaire comprend la détermination, selon au moins en partie que la première liste ou la seconde liste spécifie un identifiant de vue d'une unité NAL, qu'il convient ou non de supprimer l'unité NAL du flux binaire 3DV.

5. Procédé selon la revendication 4, dans lequel la détermination de la première liste et de la seconde liste comprend :
la détermination d'une liste de vues cibles de texture d'ancrage qui indique des vues dans le flux binaire 3DV qui ont des composantes de vue de texture qui sont requises pour décoder des images d'ancrage dans la pluralité de vues cibles ;
la détermination d'une liste de vues cibles de texture non d'ancrage qui indique des vues dans le flux binaire 3DV qui ont des composantes de vue de texture qui sont requises pour décoder des images non d'ancrage dans la pluralité de vues cibles ;
la détermination d'une liste de vues cibles de profondeur d'ancrage qui indique des vues dans le flux binaire 3DV qui ont des composantes de vue de profondeur qui sont requises pour décoder les images d'ancrage dans la pluralité de vues cibles ; et
la détermination d'une liste de vues cibles de profondeur non d'ancrage qui indique des vues dans le flux binaire 3DV qui ont des composantes de vue de profondeur qui sont requises pour décoder les images non d'ancrage dans la pluralité de vues cibles.

6. Procédé selon la revendication 5, dans lequel la détermination qu'il convient ou non de supprimer l'unité NAL du flux binaire 3DV comprend :
la détermination, selon au moins en partie que l'unité NAL appartient ou non à une image d'ancrage, que l'unité NAL appartient ou non à un type d'unité NAL de composante de vue de profondeur, et que la liste de vues cibles de texture d'ancrage spécifie ou non l'identifiant de vue de l'unité NAL, qu'il convient ou non de supprimer l'unité NAL du flux binaire 3DV, dans lequel des unités NAL appartenant au type d'unité NAL de composante de vue de profondeur encapsulent des extensions de tranches codées de composantes de vue de profondeur ; et
la détermination, selon au moins en partie que l'unité NAL appartient ou non à une image d'ancrage, que l'unité NAL appartient ou non au type d'unité NAL de composante de vue de profondeur, et que la liste de vues cibles de texture non d'ancrage spécifie ou non l'identifiant de vue de l'unité NAL, qu'il convient ou non de supprimer l'unité NAL du flux binaire 3DV.

7. Procédé selon la revendication 6, dans lequel la détermination qu'il convient ou non de supprimer l'unité NAL du flux binaire 3DV comprend :
la détermination que l'unité NAL doit être supprimée du flux binaire 3DV quand un élément de syntaxe de fanion d'image d'ancrage dans un en-tête de l'unité NAL est égal à 1, un élément de syntaxe de type d'unité NAL dans l'en-tête de l'unité NAL n'est pas égal à 21, et un élément de syntaxe d'identifiant de vue dans l'en-tête de l'unité NAL est égal à un identifiant de vue d'une vue dans la liste cible de texture d'ancrage ; et
la détermination que l'unité NAL doit être supprimée du flux binaire 3DV quand l'élément de syntaxe de fanion d'image d'ancrage dans l'en-tête de l'unité NAL est égal à 0, l'élément de syntaxe de type d'unité NAL dans l'en-tête de l'unité NAL n'est pas égal à 21, et l'élément de syntaxe d'identifiant de vue dans l'en-tête de l'unité NAL est égal à un identifiant de vue d'une vue dans la liste cible de texture non d'ancrage.

8. Procédé selon la revendication 5, dans lequel la détermination qu'il convient ou non de supprimer l'unité NAL du flux binaire 3DV comprend :
la détermination, selon au moins en partie que l'unité NAL appartient ou non à une image d'ancrage, que l'unité NAL appartient ou non à un type d'unité NAL de composante de vue de profondeur, et que la liste de vues cibles de profondeur d'ancrage spécifie ou non l'identifiant de vue de l'unité NAL, qu'il convient ou non de supprimer l'unité NAL du flux binaire 3DV, dans lequel les unités NAL appartenant au type d'unité NAL de composante de vue de profondeur encapsulent des extensions de tranches codées de composantes de vue de profondeur ; et
la détermination, selon au moins en partie que l'unité NAL appartient ou non à une image d'ancrage, que l'unité NAL appartient ou non au type d'unité NAL de composante de vue de profondeur, et que la liste de vues cibles de profondeur non d'ancrage spécifie ou non l'identifiant de vue de l'unité NAL, qu'il convient ou non de supprimer l'unité NAL du flux binaire 3DV.

9. Procédé selon la revendication 8, dans lequel la détermination qu'il convient ou non de supprimer l'unité NAL du flux binaire 3DV comprend :
la détermination que l'unité NAL doit être supprimée du flux binaire 3DV quand un élément de syntaxe de fanion d'image d'ancrage dans un en-tête de l'unité NAL est égal à 1, un élément de syntaxe de type d'unité NAL dans l'en-tête de l'unité NAL est égal à 21, et un élément de syntaxe d'identifiant de vue dans l'en-tête de l'unité NAL est égal à un identifiant de vue d'une vue dans la liste cible de profondeur d'ancrage ; et
la détermination que l'unité NAL doit être supprimée du flux binaire 3DV quand l'élément de syntaxe de fanion d'image d'ancrage dans l'en-tête de l'unité NAL est égal à 0, l'élément de syntaxe de type d'unité NAL dans l'en-tête de l'unité NAL est égal à 21, et l'élément de syntaxe d'identifiant de vue dans l'en-tête de l'unité NAL est égal à un identifiant de vue d'une vue dans la liste cible de profondeur non d'ancrage.

10. Procédé selon la revendication 1, le procédé étant exécuté par un dispositif de réseau de distribution de contenu, CDN.

11. Dispositif comprenant :
un moyen de détermination d'une première liste qui indique des vues dans un flux binaire vidéo tridimensionnel, 3DV, les vues indiquées par la première liste comportant des composantes de vue de texture qui sont requises pour décoder des images dans une pluralité de vues cibles, la pluralité de vues cibles comprenant un sous-ensemble des vues dans le flux binaire 3DV qui sont décodables à partir du sous-flux binaire, le flux binaire 3DV comportant des composantes de vue de texture codées et des composantes de vue de profondeur codées ;
un moyen de détermination d'une seconde liste séparée qui indique des vues dans le flux binaire 3DV, les vues indiquées par la seconde liste comportant des composantes de vue de profondeur qui sont requises pour décoder des images dans la pluralité de vues cibles, la première liste et la seconde liste indiquant différents sous-ensembles des vues dans le flux binaire 3DV ; et
un moyen de détermination du sous-flux binaire en fonction au moins en partie de la première liste et de la seconde liste.

12. Dispositif selon la revendication 11, dans lequel le flux binaire 3DV comprend une série d'unités de couche d'abstraction de réseau, NAL, et le moyen de détermination du sous-flux binaire comprend un moyen de détermination, selon au moins en partie que la première liste ou la seconde liste spécifie un identifiant de vue d'une unit NAL, qu'il convient ou non de supprimer l'unité NAL du flux binaire 3DV.

13. Dispositif selon la revendication 12, dans lequel le moyen de détermination de la première liste comprend :
un moyen de détermination d'une liste de vues cibles de texture d'ancrage qui indique des vues dans le flux binaire 3DV qui ont des composantes de vue de texture qui sont requises pour décoder des images d'ancrage dans la pluralité de vues cibles ;
un moyen de détermination d'une liste de vues cibles de texture non d'ancrage qui indique des vues dans le flux binaire 3DV qui ont des composantes de vue de texture qui sont requises pour décoder des images non d'ancrage dans la pluralité de vues cibles ;
un moyen de détermination d'une liste de vues cibles de profondeur d'ancrage qui indique des vues dans le flux binaire 3DV qui ont des composantes de vue de profondeur qui sont requises pour décoder les images d'ancrage dans la pluralité de vues cibles ; et
un moyen de détermination d'une liste de vues cibles de profondeur non d'ancrage qui indique des vues dans le flux binaire 3DV qui ont des composantes de vue de profondeur qui sont requises pour décoder les images non d'ancrage dans la pluralité de vues cibles.

14. Dispositif selon la revendication 13, dans lequel le moyen de détermination qu'il convient ou non de supprimer l'unité NAL du flux binaire 3DV comprend :
un moyen de détermination, selon au moins en partie que l'unité NAL appartient ou non à une image d'ancrage, que l'unité NAL appartient ou non à un type d'unité NAL de composante de vue de profondeur, et que la liste de vues cibles de texture d'ancrage spécifie ou non l'identifiant de vue de l'unité NAL, qu'il convient ou non de supprimer l'unité NAL du flux binaire 3DV, dans lequel des unités NAL appartenant au type d'unité NAL de composante de vue de profondeur encapsulent des extensions de tranches codées de composantes de vue de profondeur ; et
un moyen de détermination, selon au moins en partie que l'unité NAL appartient ou non à une image d'ancrage, que l'unité NAL appartient ou non au type d'unité NAL de composante de vue de profondeur, et que la liste de vues cibles de texture non d'ancrage spécifie ou non l'identifiant de vue de l'unité NAL, qu'il convient ou non de supprimer l'unité NAL du flux binaire 3DV.

15. Support de mémorisation lisible par ordinateur qui mémorise des instructions qui, à leur exécution par un ou plusieurs processeurs d'un dispositif, configurent le dispositif pour :
déterminer une première liste qui indique des vues dans un flux binaire 3DV, les vues indiquées par la première liste comportant des composantes de vue de texture qui sont requises pour décoder des images dans une pluralité de vues cibles, la pluralité de vues cibles comprenant un sous-ensemble des vues dans le flux binaire 3DV qui sont décodables à partir du sous-flux binaire, le flux binaire 3DV comportant des composantes de vue de texture codées et des composantes de vue de profondeur codées ;
déterminer une seconde liste séparée qui indique des vues dans le flux binaire 3DV, les vues indiquées par la seconde liste comportant des composantes de vue de profondeur qui sont requises pour décoder des images dans la pluralité de vues cibles, la première liste et la seconde liste indiquant différents sous-ensembles des vues dans le flux binaire 3DV ; et
déterminer le sous-flux binaire en fonction au moins en partie de la première liste et de la seconde liste.
